# EUROPEAN PATENT APPLICATION

(11) **EP 1 909 047 A1**
(43) Date of publication of application: **09.04.2008**
(21) Application number: 06781341.0
(22) Date of filing: 20.07.2006
(51) Int. Cl.: F25B 29/00, F25B 1/00, F25B 41/04

(54) **REFRIGERATION DEVICE**

(30) Priority: 26.07.2005 JP 2005215543; 20.01.2006 JP 2006012115
(71) Applicant: DAIKIN INDUSTRIES, LTD., Osaka-shi, Osaka 530-8323 (JP)
(72) Inventor: TAKEGAMI, Masaaki c/o Kanaoka Factory, Sakai Plant, Sakai-shi, Osaka 591-8511 (JP); TANIMOTO, Kenji Kanaoka Factory, Sakai Plant, Sakai-shi, Osaka 591-8511 (JP); ODA, Yoshinari c/o Kanaoka Factory, Sakai Plant, Sakai-shi, Osaka 591-8511 (JP); NOMURA, Kazuyoshi Kanaoka Factory, Sakai Plant,, Sakai-shi, Osaka 591-8511 (JP); KONDO, Azuma Kanaoka Factory, Sakai Plant, Sakai-shi, Osaka 591-8511 (JP)
(74) Representative: HOFFMANN EITLE
(86) International application number: PCT/JP2006/314381
(87) International publication number: WO 2007/013345

(57) **Abstract**

A refrigeration apparatus **(1)** is disclosed which is provided with multiple systems of utilization-side heat exchangers **(20, 30, 40)** and in which liquid-side interunit piping lines **(53, 54, 55)** are combined into a single liquid-side interunit piping line in multiple systems of liquid lines. When the refrigeration apparatus **(1)** provides space heating of 100% heat recovery without the use of an outdoor heat exchanger **(15),** the flow of refrigerant in a refrigerant circuit **(50)** is stabilized even when the temperature of outside air is low, thereby preventing the capacity to provide refrigeration from decreasing. In addition, in order to prevent shutdown of the refrigeration apparatus **(1)** due to malfunction, a liquid refrigerant inflow passageway **(66)** is connected to a heat source-side liquid pipe **(62)** of an outdoor unit **(10),** the heat source-side liquid pipe **(62)** being connected to an integrated liquid pipe **(53)** of the liquid-side interunit piping lines **(53, 54, 55),** and to an inlet port of the a receiver **(17),** and a switch valve **(SV1)** capable of being on-off controlled is disposed in the liquid refrigerant inflow passageway **(66).**

## Description

### TECHNICAL FIELD

The present invention relates in general to refrigeration apparatuses, and more particularly to refrigeration apparatuses which have a plurality of utilization-side heat exchangers for cold storage/freeze storage and air conditioning and which are operable in an operation mode of 100% heat recovery between/among each utilization-side heat exchanger.

### BACKGROUND ART

In the past, a refrigeration apparatus of the type which performs a refrigeration cycle has been known in the art. Such a refrigeration apparatus has been used widely as an air conditioner for providing cooling/heating of an indoor space and as a cooler for providing cooling of a showcase compartment for food cold storage/freeze storage. This type of refrigeration apparatus includes a refrigeration apparatus which provides both air conditioning and cold storage/freeze storage (for example, see Patent Document 1). This refrigeration apparatus is installed, for example, in a convenience store, and both store space air conditioning and showcase cooling are accomplished by installation of the single refrigeration apparatus.

The aforesaid refrigeration apparatus is configured as follows. A plurality of utilization-side heat exchangers (heat exchangers for cold storage, freeze storage, and air conditioning which are disposed respectively in utilization-side units (cold storage showcases, freeze storage showcases, and air conditioning indoor units)) are connected, by liquid- and gas-side interunit piping lines, in parallel to a heat source-side (outdoor) heat exchanger of a heat source-side (outdoor) unit which is installed outdoors.

Here, in the case where the refrigerant circuit has two systems, namely a first system-side circuit for cold storage/freeze storage and a second system-side circuit for air conditioning, two interunit piping lines are generally arranged for each of a liquid and gas lines. On the other hand, in order to reduce the number of interunit piping lines, it is proposed that liquid lines of two systems share a single liquid-side interunit piping line (see Patent Document 2).

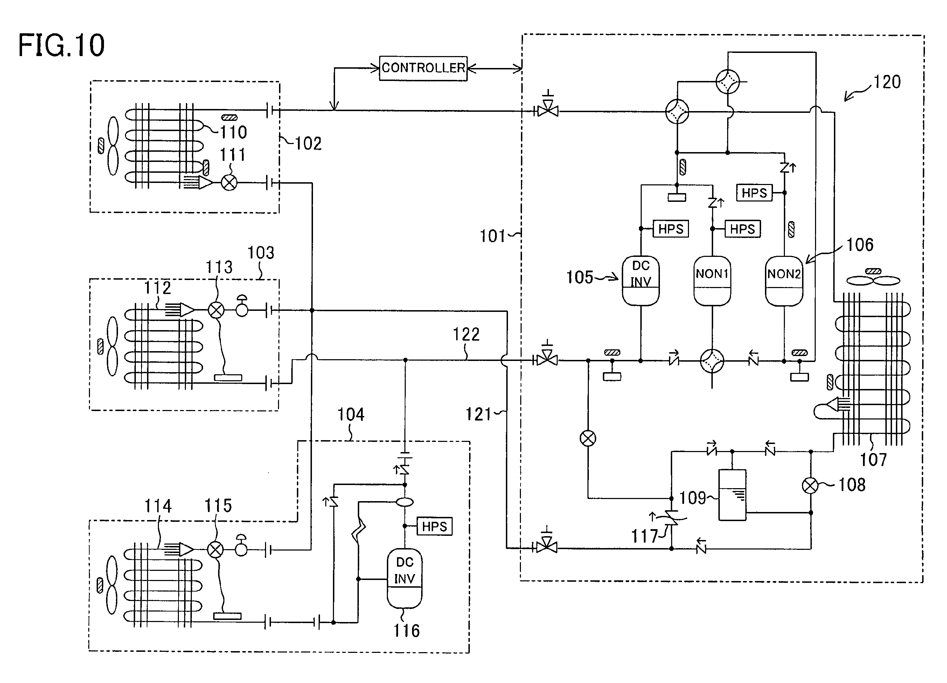

More specifically, the refrigerant circuit of this apparatus is configured as shown in Figure **10****.** Referring to Figure **10****,** an outdoor unit **(101),** an indoor unit **(102),** a cold storage showcase (cold storage unit) **(103),** and a freeze storage showcase (freeze storage unit) **(104)** are shown. The outdoor unit **(101)** is provided with compression mechanisms **(105, 106),** an outdoor heat exchanger **(107),** an outdoor expansion valve **(108),** and a receiver **(109).** The indoor unit **(102)** is provided with an indoor heat exchanger (air conditioning heat exchanger) **(110)** and an indoor expansion valve **(111).** In addition, the cold storage showcase **(103)** is provided with a cold storage heat exchanger **(112)** and a cold storage expansion valve **(113).** The freeze storage showcase **(104)** is provided with a freeze storage heat exchanger **(114),** a freeze storage expansion valve **(115),** and a booster compressor **(116).**

A refrigerant circuit **(120)** of the refrigeration apparatus includes a first system-side circuit for cold storage/freeze storage and a second system-side circuit for air conditioning. The first system-side circuit is configured such that refrigerant is circulated in one direction between the outdoor heat exchanger **(107)** and the cold and freeze storage heat exchangers **(112, 114).** The second system-side circuit is configured such that refrigerant is circulated reversibly between the outdoor heat exchanger **(107)** and the indoor heat exchanger **(110).** And, a single liquid-side interunit piping line **(121)** is shared between the liquid line of the first system-side circuit and the liquid line of the second system-side circuit.

In the aforesaid refrigeration apparatus, it is possible to provide indoor space air conditioning and cooling of each showcase while the outdoor heat exchanger **(107)** (installed outdoors) is used as a heat source and, in addition, it is also possible to provide, without the use of the outdoor heat exchanger **(107),** heating and cold storage/freeze storage with 100% heat recovery in which the indoor heat exchanger **(110)** functions as a condenser and the cold and freeze storage heat exchangers **(112, 114)** function as evaporators.

Now, when performing a 100% heat recovery operation mode in the refrigerant circuit **(120)** provided with the single liquid-side interunit piping line **(121),** discharged refrigerant from the compression mechanisms **(105, 106)** is circulated in the refrigerant circuit **(120)** such that it is condensed in the indoor heat exchanger **(110),** evaporated in the cold and freeze storage heat exchangers **(112, 114),** and drawn again into the compression mechanisms **(105, 106).** Stated another way, at this time, it is required that liquid refrigerant condensed in the indoor heat exchanger **(110)** is not allowed to flow in the direction of the heat source-side heat exchanger **(107)** from the receiver **(109)** but is to be introduced into the cold and freeze storage heat exchangers **(112, 114).**

However, since the pressure in the receiver **(109)** drops, for example, when the temperature of outside air is low, the internal pressure of the liquid-side interunit piping line **(121)** likewise drops, and liquid refrigerant exiting the indoor heat exchanger **(110)** is liable to flow into the receiver **(109)** from the liquid-side interunit piping line **(121),** so that the volume of flow of refrigerant flowing to the cold and freeze storage heat exchangers **(112, 114)** may run short. And, if the volume of flow of refrigerant in the cold and freeze storage heat exchangers **(112, 114)** is insufficient, this reduces the capacity to provide cooling of the compartment of each of the showcases **(103, 104).**

To cope with the above, in the refrigeration apparatus, a relief valve **(117)** is disposed in a refrigerant passageway extending from the liquid-side interunit piping line **(121)** to the receiver **(109).** The relief valve **(117)** is a valve which is configured such that although it is placed in the opened state if the pressure of refrigerant in the liquid-side interunit piping line **(121)** increases to equal or exceed a predetermined value, it remains in the closed state until reaching the predetermined value. And, by setting the working pressure of the relief valve **(117)** to a higher level than the pressure of the liquid-side interunit piping line **(121)** during the 100% heat recovery operation mode, the inflow of liquid refrigerant into the receiver **(109)** during the 100% heat recovery operation mode is prevented so that the flow of refrigerant in the refrigerant circuit **(120)** is stabilized even when the temperature of outside air is low, thereby to prevent the capacity to provide refrigeration from falling.

In addition, it is also possible for the refrigeration apparatus to perform a refrigerant cycle for space heating in which the outdoor heat exchanger (107) functions as an evaporator. However, at that time, the relief valve **(117)** is placed in the opened state because the suction pressure of the compressor **(106)** is applied to the relief valve **(117).** Also note that during the cooling operation mode no refrigerant flows through the passageway in which the relief valve **(117)** is disposed.
Patent Document 1: JP-A-2001-280749
Patent Document 2: JP-A-2005-134103

### DISCLOSURE OF THE INVENTION

### PROBLEMS THAT THE INVENTION SEEKS TO OVERCOME

For example, in the case where a high heating capacity is required during the 100% heat recovery operation mode in the aforesaid apparatus, it is conceivable that the amount of liquid refrigerant condensed in the indoor heat exchanger **(100)** exceeds the amount of refrigerant required in the cold and freeze storage heat exchangers **(112, 114),** leading to the result that liquid refrigerant becomes excessive between the indoor heat exchanger **(110)** and the liquid-side interunit piping line **(121).** On the other hand, if at this time there is a request for increasing the capacity to provide cooling storage/freezing storage, the operation capacity of the compression mechanisms **(105, 106)** increases, and the amount of discharge gas refrigerant supplied to the indoor heat exchanger **(110)** will increase.

Even if the amount of discharge gas refrigerant is increased in the way as described above when there is excess liquid refrigerant in the indoor heat exchanger **(110)** and the liquid-side interunit piping line **(121),** gas refrigerant will not readily flow through the indoor heat exchanger **(110)** because the liquid-side interunit piping line **(121)** is filled up with liquid refrigerant, and the discharge pressure of the compression mechanisms **(105, 106)** gradually increases. In this case, with the increase in the discharge pressure, the liquid pressure of the liquid-side interunit piping line **(121)** also increases. If this liquid pressure exceeds the working pressure of the relief valve **(117),** the relief valve **(117)** is placed in the opened state, thereby making it possible to permit escape of the liquid refrigerant to the receiver **(109),** and no operation problems will take place.

However, the discharge pressure of the compressors **(105, 106)** increases too much in some cases before the relief valve **(117)** is placed in the opened state, thereby causing a pressure switch (HPS) for high pressure protection to activate. As a result, the compressors **(105, 106)** stop operating and the apparatus may stop operating due to malfunction.

With the above problems in mind, the present invention was made. Accordingly, an object of the present invention is to prevent the capability to provide refrigeration from falling by stabilizing the flow of refrigerant in a refrigerant circuit even when the temperature of outside air is low, and to avoid shutdown due to malfunction, at the time when providing heating of 100% heat recovery without the use of an outdoor heat exchanger in a refrigeration apparatus which is provided with plural systems of utilization-side heat exchangers and in which a single liquid-side interunit piping line is shared among a plurality of liquid lines.

### MEANS FOR OVERCOMING THE PROBLEMS

The present invention provides, as a first aspect, a refrigeration apparatus comprising: a heat source-side unit **(10)** including a compression mechanism **(11D, 11E),** a heat source-side heat exchanger **(15),** and a receiver **(17);** a first utilization-side unit (30, **40)** including a first utilization-side heat exchanger **(31, 41);** a second utilization-side unit **(20)** including a second utilization-side heat exchanger **(21);** and a gas-side interunit piping line **(51, 52)** and a liquid-side interunit piping line **(53, 54, 55)** which establish connections between each unit **(10, 20, 30, 40)** to thereby constitute a refrigerant circuit **(50),** wherein the gas-side interunit piping line **(51, 52)** includes: a first gas-side interunit piping line **(51)** which is connected to the heat source-side unit **(10)** and to the first utilization-side unit **(30, 40);** and a second gas-side interunit piping line **(52)** which is connected to the heat source-side unit **(10)** and to the second utilization-side unit **(20),** and wherein the liquid-side interunit piping line **(53, 54, 55)** includes: an integrated liquid pipe **(53)** which is connected to the heat source-side unit **(10);** a first branch liquid pipe (54) which diverges from the integrated liquid pipe **(53)** to connect to the first utilization-side unit **(30, 40);** and a second branch liquid pipe **(55)** which diverges from the integrated liquid pipe **(53)** to connect to the second utilization-side unit **(20).**

And the refrigeration apparatus of the first aspect is characterized in that the refrigeration apparatus further comprises: a liquid refrigerant inflow passageway **(66)** which is connected to a heat source-side liquid pipe **(62)** of the heat source-side unit **(10),** the heat source-side liquid pipe **(62)** being connected to the integrated liquid pipe **(53)** of the liquid-side interunit piping line **(53, 54, 55),** and to an inlet port of the receiver **(17);** and a switch valve **(SV1)** which is disposed in the liquid refrigerant inflow passageway (66) and which is capable of being on-off controlled.

In the first aspect of the present invention, during the 100% heat recovery operation mode in which the second utilization-side heat exchanger **(21)** functions as a condenser while the first utilization-side heat exchanger **(31, 41)** functions as an evaporator, refrigerant flows sequentially through the compression mechanism **(11D, 11E),** through the second gas-side interunit piping line **(52),** through the second utilization-side heat exchanger **(21),** through the second branch liquid pipe **(55),** through the first branch liquid pipe **(54),** through the first utilization-side heat exchanger **(31, 41),** and through the first gas-side interunit piping line **(51).** At this time, if the switch valve **(SV1)** is placed in the closed state, no refrigerant flows towards any of the first branch liquid pipe **(54),** the integrated liquid pipe **(53),** the heat source-side liquid pipe **(62),** the liquid refrigerant inflow passageway **(66),** and the receiver **(17).** Accordingly, the refrigeration apparatus operates wherein the quantity of heat of condensation of the second utilization-side heat exchanger **(21)** and the quantity of heat of evaporation of the first utilization-side heat exchanger **(31, 41)** are in balance with each other.

On the other hand, if the operation capacity of the compression mechanism **(11D, 11E)** is increased when there is excess refrigerant in the second utilization-side heat exchanger **(21)** and the liquid-side interunit piping line **(53, 54, 55),** it is best to perform an operation that places the switch valve **(SV1)** in the opened state. When this is done, it becomes possible to permit escape of the liquid refrigerant congested in the second utilization-side heat exchanger **(21)** and the liquid-side interunit piping line **(53, 54, 55)** to the receiver **(17)** from the first branch liquid pipe **(54)** by way of the integrated liquid pipe **(53),** the heat source-side liquid pipe **(62),** and the liquid refrigerant inflow passageway **(66),** whereby the discharge pressure of the compression mechanism **(11D, 11E)** is prevented from increasing too much.

The present invention provides, as a second aspect according to the first aspect, a refrigeration apparatus which is characterized in that a plurality of the second utilization-side units **(20)** are connected in parallel to the heat source-side unit **(10).**

In the second aspect of the present invention, when, during the 100% heat recovery operation mode, a selected one of the second utilization-side units **(20)** is placed in the thermo-off state (which is a state that performs an air supply operation in which refrigerant either stops circulating through the second utilization-side heat exchanger **(21)** or is allowed to flow therethrough, but in very small amount), the expansion mechanism which is connected to the second utilization-side unit **(20)** is either placed in the fully closed state or is set such that although it is opened the degree of opening thereof is very small. At this time, since the rest of the second utilization-side units **(20)** continue to provide heating (space heating), discharged refrigerant from the compression mechanism **(11D, 11E)** is supplied also to the second utilization-side heat exchanger **(21)** placed in the thermo-off state. However, little refrigerant flows in the thermo-offed, second utilization-side heat exchanger **(21)** and, as a result, refrigerant is rapidly accumulated therein.

At this time, if there is a request to increase the refrigeration capacity of the first utilization-side heat exchanger **(31, 41),** an operation to increase the capacity of the compression mechanism **(11D, 11E)** is performed. As a result, the discharge pressure of the compression mechanism **(11D, 11E)** increases, so that if the switch valve **(SV1)** of the liquid refrigerant inflow passageway **(66)** continues to remain in the closed state, this may lead to the possibility that the discharge pressure of the compression mechanism **(11D, 11E)** increases too much, but nonetheless an operation to place the switch valve **(SV1)** in the opened state is performed in the second aspect of the present invention, thereby permitting escape of the liquid refrigerant to the receiver **(17),** and the discharge pressure of the compression mechanism **(11D, 11E)** is prevented from increasing too much.

The present invention provides, as a third aspect according to either the first or the second aspect, a refrigeration apparatus which is characterized in that the first utilization-side unit **(30, 40)** is a cooling machine for providing compartment cooling and the heat source-side unit **(10)** and the first utilization-side unit **(30, 40)** together constitute a first system-side circuit **(50A)** in which refrigerant is circulated in one direction; and that the second utilization-side unit **(20)** is an air conditioning machine for providing indoor air conditioning and the heat source-side unit **(10)** and the second utilization-side unit **(20)** together constitute a second system-side circuit **(50B)** in which refrigerant is reversibly circulated.

In the third aspect of the present invention, the first utilization-side heat exchanger **(31, 41)** in the first system-side circuit **(50A)** provides compartment cooling while the second utilization-side heat exchanger **(21)** in the second system-side circuit **(50B)** provides indoor air conditioning (space cooling/heating). In this case, it is possible to prevent the discharge pressure of the compression mechanism **(11D, 11E)** from increasing too much by placing the switch valve **(SV1)** in the opened state, even if during the 100% heat recovery operation mode in which the second utilization-side heat exchanger **(21)** functions as a condenser while the first utilization-side heat exchanger **(31, 41)** functions as an evaporator, the operation capacity of the compression mechanism **(11D, 11E)** is increased when there is excess refrigerant in the second utilization-side heat exchanger **(21)** and the liquid-side interunit piping line **(53, 54, 55).**

The present invention provides, as a fourth aspect according to any one of the first to third aspects, a refrigeration apparatus which is characterized in that the refrigeration apparatus further comprises a control means **(95)** for performing on-off control of the switch valve **(SV1)** in response to the operation state.

In the fourth aspect of the present invention, the switch valve **(SV1)** is placed in the opened state, for example, when the discharge pressure of the compression mechanism **(11D, 11E)** increases or when although there is no increase in the discharge pressure, there is an accumulation of liquid refrigerant between the second utilization-side heat exchanger **(21)** and the liquid-side interunit piping line **(53, 54, 55)** during the 100% heat recovery operation mode. On the other hand, the switch valve **(SV1)** is placed in the closed state when the second system-side circuit **(50B)** provides cooling of the utilization side (for example, when the second system-side circuit **(50B)** is a circuit for air conditioning and is in operation to provide space cooling) or when the compression mechanism **(11D, 11E)** is placed at rest. In addition, even in the case where the second utilization-side heat exchanger **(21)** functions as a condenser, an operation to place the switch valve **(SV1)** in the opened state is performed in such an operation state that the heat source-side heat exchanger **(15)** is employed as an evaporator.

The present invention provides, as a fifth aspect according to the fourth aspect, a refrigeration apparatus which is characterized in that the control means **(95)** is configured such that in an operation state in which the second utilization-side heat exchanger **(21)** functions as a condenser while the first utilization-side heat exchanger **(31, 41)** functions as an evaporator, the switch valve **(SV1)** is placed either in the closed state if the discharge pressure of the compression mechanism **(11D, 11E)** is below a predetermined value or in the opened state if the discharge pressure of the compression mechanism **(11D, 11E)** increases to equal or exceed the predetermined value.

In the fifth aspect of the present invention, during the 100% heat recovery operation mode in which the second utilization-side heat exchanger **(21)** functions as a condenser while the first utilization-side heat exchanger **(31, 41)** functions as an evaporator, the switch valve **(SV1)** is placed in the closed state if the discharge pressure of the compression mechanism **(11D, 11E)** is below the predetermined value. Accordingly, the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, the switch valve **(SV1)** is placed in the opened state if the discharge pressure of the compression mechanism **(11D, 11E)** reaches the predetermined value or above, thereby permitting escape of the high pressure refrigerant between the second utilization-side heat exchanger **(21)** and the liquid-side interunit piping line **(53, 54, 55)** into the receiver **(17).** By setting the set pressure of the switch valve **(SV1)** at which it is placed in the opened state to fall below the working pressure of a pressure switch for high pressure protection, it becomes possible to prevent the discharge pressure of the compression mechanism **(11D, 11E)** from increasing too much.

The present invention provides, as a sixth aspect according to the fourth aspect, a refrigeration apparatus which is characterized in that the control means **(95)** is configured such that in an operation state in which the second utilization-side heat exchanger **(21)** functions as a condenser while the first utilization-side heat exchanger **(31, 41)** functions as an evaporator, the switch valve **(SV1)** is placed either in the closed state if the amount of liquid refrigerant accumulated in the second utilization-side heat exchanger **(21)** and the liquid-side interunit piping line **(53, 54, 55)** is below a predetermined value or in the opened state if it is estimated that the liquid refrigerant amount accumulated reaches the predetermined value or above. In this case, it is possible to estimate that liquid refrigerant is accumulated in the second utilization-side heat exchanger **(21)** and the liquid-side interunit piping line **(53, 54, 55)** from the fact that the value, detected by a sensor for detection of the temperature of gas refrigerant in the second utilization-side heat exchanger **(21)** during the 100% heat recovery operation mode, approaches the saturated temperature corresponding to the pressure.

In the sixth aspect of the present invention, during the 100% heat recovery operation mode in which the second utilization-side heat exchanger **(21)** functions as a condenser while the first utilization-side heat exchanger **(31, 41)** functions as an evaporator, the switch valve **(SV1)** is placed in the closed state if the amount of liquid refrigerant accumulated in the second utilization-side heat exchanger **(21)** and the liquid-side interunit piping line **(53, 54, 55)** is below the predetermined value. Accordingly, the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, the switch valve **(SV1)** is placed in the opened state if it is estimated that the liquid refrigerant amount accumulated reaches the predetermined value or above, thereby permitting escape of the high pressure refrigerant between the second utilization-side heat exchanger **(21)** and the liquid-side interunit piping line **(53, 54, 55)** into the receiver **(17).** This therefore makes it possible to prevent excess accumulation of liquid refrigerant in the second utilization-side heat exchanger **(21)** and the liquid-side interunit piping line **(53, 54, 55).**

The present invention provides, as a seventh aspect according to the fourth aspect, a refrigeration apparatus which is characterized in that the control means **(95)** is configured such that in an operation state in which the second utilization-side heat exchanger **(21)** functions as a condenser while the first utilization-side heat exchanger **(31, 41)** functions as an evaporator, the switch valve **(SV1)** is placed either in the closed state if the temperature of liquid refrigerant in the second utilization-side heat exchanger **(21)** is below the predetermined value or in the opened state if the liquid refrigerant temperature increases to equal or exceed the predetermined value.

In the seventh aspect of the present invention, during the 100% heat recovery operation mode in which the second utilization-side heat exchanger **(21)** functions as a condenser while the first utilization-side heat exchanger **(31, 41)** functions as an evaporator, the switch valve **(SV1)** is placed in the closed state if the temperature of liquid refrigerant in the second utilization-side heat exchanger **(21)** is below a predetermined value. Accordingly, the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, the switch valve **(SV1)** is placed in the opened state if the liquid refrigerant temperature increases to equal or exceed the predetermined value, thereby permitting escape of the high pressure refrigerant between the second utilization-side heat exchanger **(21)** and the liquid-side interunit piping line **(53, 54, 55)** into the receiver **(17).** By setting the set pressure of the switch valve **(SV1)** at which it is placed in the opened state to fall below the working pressure of a pressure switch for high pressure protection, it becomes possible to prevent the discharge pressure of the compression mechanism **(11D, 11E)** from increasing too much.

The present invention provides, as an eighth aspect according to the fourth aspect, a refrigeration apparatus which is characterized in that the control means **(95)** is configured such that in an operation state in which the second utilization-side heat exchanger **(21)** functions as a condenser while the first utilization-side heat exchanger **(31, 41)** functions as an evaporator, the switch valve **(SV1)** is placed either in the closed state if the pressure of liquid refrigerant in the liquid-side interunit piping line **(53, 54, 55)** is below a predetermined value or in the opened state if the liquid refrigerant pressure increases to equal or exceed the predetermined value.

In the eighth aspect of the present invention, during the 100% heat recovery operation mode in which the second utilization-side heat exchanger **(21)** functions as a condenser while the first utilization-side heat exchanger **(31, 41)** functions as an evaporator, the switch valve **(SV1)** is placed in the closed state if the pressure of liquid refrigerant in the liquid-side interunit piping line **(53, 54, 55)** is below the predetermined value. Accordingly, the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, the switch valve **(SV1)** is placed in the opened state if the liquid refrigerant pressure increases to equal or exceed the predetermined value, thereby permitting escape of the high pressure refrigerant in the liquid-side interunit piping line **(53, 54, 55)** into the receiver **(17).** By setting the set pressure of the switch valve **(SV1)** at which it is placed in the opened state to fall below the working pressure of a pressure switch for high pressure protection, it becomes possible to prevent the discharge pressure of the compression mechanism **(11D, 11E)** from increasing too much.

### ADVANTAGEOUS EFFECTS OF THE INVENTION

In the refrigeration apparatus of the present invention capable of operating, without the use of the heat source-side heat exchanger **(15),** in a 100% heat recovery operation mode in which the second utilization-side heat exchanger **(21)** and the first utilization-side heat exchanger **(31, 41)** function respectively as a condenser and as an evaporator, the liquid refrigerant inflow passageway **(66)** is connected to the heat source-side liquid pipe **(62)** of the heat source-side unit **(10),** the heat source-side liquid pipe **(62)** being connected to the integrated liquid pipe **(53)** of the liquid-side interunit piping line **(53, 54, 55),** and to the inlet port of the receiver **(17)** and the switch valve **(SV1)** capable of being on-off controlled is disposed in the liquid refrigerant inflow passageway **(66).** Therefore, by performing such a 100% heat recovery operation mode with the switch valve **(SV1)** placed in the closed state, the refrigeration apparatus operates wherein the quantity of heat of condensation of the second utilization-side heat exchanger **(21)** and the quantity of heat of evaporation of the first utilization-side heat exchanger **(31, 41)** are in balance with each other.

On the other hand, if the operation capacity of the compression mechanism **(11D, 11E)** is increased when there is excess refrigerant in the second utilization-side heat exchanger **(21)** and the liquid-side interunit piping line **(53, 54, 55),** an operation to place the switch valve **(SV1)** in the opened state is performed, thereby permitting escape of the liquid refrigerant accumulated in the second utilization-side heat exchanger **(21)** and the liquid-side interunit piping line **(53, 54, 55)** to the receiver **(17)** from the first branch liquid pipe **(54)** by way of the integrated liquid pipe **(53),** the heat source-side liquid pipe **(62),** and the liquid refrigerant inflow passageway **(66).** Therefore, it becomes possible to prevent the high pressure of the compression mechanism **(11D, 11E)** from increasing too much. Accordingly, if it is arranged such that prior to activation of the pressure switch **(HPS)** for high pressure protection the switch valve **(SV1)** is placed in the opened state, this makes it possible to prevent the refrigeration apparatus from malfunctioning to stop operating due to shutdown of the compression mechanism **(11D, 11E).**

In the case where the second utilization-side units **(20)** are connected in parallel to the heat source-side unit **(10),** the discharge pressure of the compression mechanism **(11D, 11E)** tends to increase if there is a second utilization-side unit **(20)** that is placed in the thermo-off state and in addition the refrigeration apparatus tends to stop operating because of activation of the pressure switch for high pressure protection. However, according to the second aspect of the present invention, placing the switch valve **(SV1)** in the opened state prior to activation of the pressure switch may ensure that the malfunction of the refrigeration apparatus is prevented from occurring.

In the refrigeration apparatus according to the third aspect of the present invention having the first system-side circuit **(50A)** in which refrigerant is circulated between the heat source-side unit **(10)** and the first utilization-side unit **(30, 40)** in one direction to thereby provide compartment cooling and the second system-side circuit **(50A)** in which refrigerant is circulated reversibly between the heat source-side unit **(10)** and the second utilization-side unit **(20)** to thereby provide indoor air conditioning, the discharge pressure of the compression mechanism **(11D, 11E)** is prevented from increasing too much by placing the switch valve **(SV1)** in the opened state during the 100% heat recovery operation mode in which the second utilization-side heat exchanger **(21)** and the first utilization-side heat exchanger **(31, 41)** function, respectively, as a condenser and as an evaporator, even if the operation capacity of the compression mechanism **(11D, 11E)** is increased when there is excess refrigerant in the second utilization-side heat exchanger **(21)** and the liquid-side interunit piping line **(53, 54, 55).** Accordingly, as in the first and second aspects of the present invention, it is ensured that the refrigeration apparatus is prevented from malfunction.

According to the fourth aspect of the present invention, by virtue of the provision of the control means **(95)** capable of on-off control of the switch valve (SV1) in response to the operation state, it becomes possible to prevent the occurrence of operation problems in the 100% heat recovery operation mode or other operation mode.

According to the fifth aspect of the present invention, in the operation state in which the second utilization-side heat exchanger **(21)** and the first utilization-side heat exchanger **(31, 41)** function, respectively, as a condenser and an evaporator, the switch valve **(SV1)** is placed in the closed state if the discharge pressure of the compression mechanism **(11D, 11E)** is below the predetermined value while on the other hand the switch valve **(SV1)** is placed in the opened state if the discharge pressure of the compression mechanism **(11D, 11E)** increases to equal or exceed the predetermined value. Therefore, during the 100% heat recovery operation mode, the switch valve **(SV1)** is placed in the closed state under normal conditions whereby the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, since it is possible to permit escape of high pressure refrigerant between the second utilization-side heat exchanger (21) and the liquid-side interunit piping line **(53, 54, 55)** into the receiver **(17)** by placing the switch valve **(SV1)** in the opened state if the discharge pressure of the compression mechanism **(11D, 11E)** reaches the predetermined value or above, it becomes possible to prevent the problem that causes the refrigeration apparatus to stop operating by setting the set pressure of the switch valve **(SV1)** at which it is placed in the opened state to fall below the working pressure of the pressure switch for high pressure protection.

According to the sixth aspect of the present invention, in the operation state in which the second utilization-side heat exchanger **(21)** and the first utilization-side heat exchanger **(31, 41)** function, respectively, as a condenser and an evaporator, the switch valve **(SV1)** is placed in the closed state if the amount of liquid refrigerant accumulated in the second utilization-side heat exchanger **(21)** and the liquid-side interunit piping line **(53, 54,** 55) is below the predetermined value while on the other hand the switch valve **(SV1)** is placed in the opened state if it is estimated that the liquid refrigerant amount accumulated reaches the predetermined value or above. Therefore, during the 100% heat recovery operation mode, the switch valve **(SV1)** is placed in the closed state under normal conditions whereby the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, it is possible to permit escape of high pressure refrigerant between the second utilization-side heat exchanger **(21)** and the liquid-side interunit piping line **(53, 54, 55)** into the receiver **(17)** by placing the switch valve **(SV1)** in the opened state if it is estimated that the liquid refrigerant amount accumulated reaches the predetermined value or above. This therefore makes it possible to prevent excess accumulation of liquid refrigerant in the second utilization-side heat exchanger **(21)** and the liquid-side interunit piping line **(53, 54, 55),** and it becomes also possible to prevent the refrigeration apparatus from malfunctioning to stop operating due to the discharge pressure of the compression mechanism **(11D, 11E)** increasing too much.

According to the seventh aspect of the present invention, in the operation state in which the second utilization-side heat exchanger **(21)** and the first utilization-side heat exchanger **(31, 41)** function, respectively, as a condenser and an evaporator, the switch valve **(SV1)** is placed in the closed state if the temperature of liquid refrigerant in the second utilization-side heat exchanger **(21)** is below the predetermined value while on the other hand the switch valve **(SV1)** is placed in the opened state if the liquid refrigerant temperature increases to equal or exceed the predetermined value. Therefore, during the 100% heat recovery operation mode, the switch valve **(SV1)** is placed in the closed state under normal conditions whereby the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, since it is possible to permit escape of high pressure refrigerant between the second utilization-side heat exchanger **(21)** and the liquid-side interunit piping line **(53, 54, 55)** into the receiver **(17)** by placing the switch valve **(SV1)** in the opened state if the liquid refrigerant temperature increases to equal or exceed the predetermined value, it becomes possible to prevent the problem that causes the compression mechanism **(11D, 11E)** to stop operating by setting the pressure derived from the set temperature of the switch valve **(SV1)** at which it is placed in the opened state to fall below the working pressure of the pressure switch for high pressure protection.

According to the eighth aspect of the present invention, in the operation state in which the second utilization-side heat exchanger **(21)** and the first utilization-side heat exchanger **(31, 41)** function, respectively, as a condenser and an evaporator, the switch valve **(SV1)** is placed in the closed state if the pressure of liquid refrigerant in the liquid-side interunit piping line **(53, 54, 55)** is below the predetermined value while on the other hand the switch valve **(SV1)** is placed in the opened state if the liquid refrigerant pressure increases to equal or exceed the predetermined value. Therefore, during the 100% heat recovery operation mode, the switch valve **(SV1)** is placed in the closed state under normal conditions whereby the refrigeration apparatus operates wherein the quantity of heat of condensation of the second utilization-side heat exchanger **(21)** and the quantity of heat of evaporation of the first utilization-side heat exchanger **(31, 41)** are in balance with each other. On the other hand, since it is possible to permit escape of high pressure refrigerant in the liquid-side interunit piping line **(53, 54, 55)** into the receiver **(17)** by placing the switch valve **(SV1)** in the opened state if the liquid refrigerant pressure increases to equal or exceed the predetermined value, it becomes possible to prevent the problem that causes the compression mechanism **(11D, 11E)** to stop operating by setting the pressure derived from the set temperature of the switch valve **(SV1)** at which it is placed in the opened state to fall below the working pressure of the pressure switch for high pressure protection.

### BRIEF DESCRIPTION OF THE DRAWINGS

In the accompanying drawings:
Figure **1** is a refrigerant circuit diagram of a refrigeration apparatus according to an embodiment of the present invention;
Figure **2** is a refrigerant circuit diagram illustrating a cooling operation mode in the embodiment;
Figure **3** is a refrigerant circuit diagram illustrating a refrigeration operation mode in the embodiment;
Figure **4** is a refrigerant circuit diagram illustrating a first cooling/refrigeration operation mode in the embodiment;
Figure **5** is a refrigerant circuit diagram illustrating a second cooling/refrigeration operation mode in the embodiment;
Figure **6** is a refrigerant circuit diagram illustrating a heating operation mode in the embodiment;
Figure **7** is a refrigerant circuit diagram illustrating a first heating/refrigeration operation mode in the embodiment;
Figure 8 is a refrigerant circuit diagram illustrating a second heating/refrigeration operation mode in the embodiment;
Figure **9** is a refrigerant circuit diagram illustrating a third heating/refrigeration operation mode in the embodiment; and
Figure **10** is a refrigerant circuit diagram of a conventional refrigeration apparatus.

### DESCRIPTION OF THE REFERENCE NUMERALS

1: refrigeration apparatus
10: outdoor unit (heat source-side unit)
11D: compression mechanism
11E: compression mechanism
15: outdoor heat exchanger (heat source-side heat exchanger)
17: receiver
20: indoor unit (second utilization-side unit)
21: indoor heat exchanger (second utilization-side heat exchanger)
30: cold storage unit (first utilization-side unit)
31: cold storage heat exchanger (first utilization-side heat exchanger)
40: freeze storage unit (first utilization-side unit)
41: freeze storage heat exchanger (first utilization-side heat exchanger)
50: refrigerant circuit
50A: first system-side circuit
50B: second system-side circuit
51: first gas-side interunit piping line (gas-side interunit piping line)
52: second gas-side interunit piping line (gas-side interunit piping line)
53: integrated liquid pipe (liquid-side interunit piping line)
54: first branch liquid pipe (liquid-side interunit piping line)
55: second branch liquid pipe (liquid-side interunit piping line)
62: outdoor liquid pipe (heat source-side liquid pipe)
66: liquid refrigerant inflow passageway
95: control means
SV 1: solenoid valve (switch valve)

### BEST MODE FOR CARRYING OUT THE INVENTION

In the following, preferred embodiments of the present invention will be described in detail with reference to the drawings.

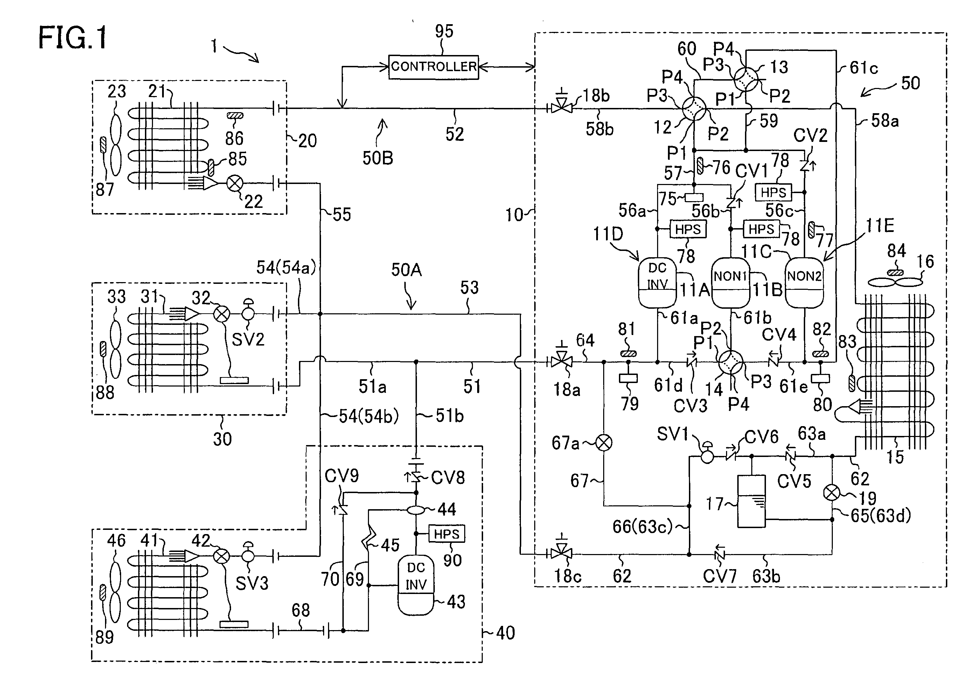

Figure **1** is a refrigerant circuit diagram of a refrigeration apparatus **(1)** according to an embodiment of the present invention. The refrigeration apparatus **(1)** is installed, for example, in a convenience store and provides cooling of a showcase used for cold storage, cooling of a showcase used for freeze storage, and cooling/heating of the store space.

The refrigeration apparatus **(1)** includes these units: an outdoor unit (heat source-side unit) **(10),** an indoor unit (second utilization-side unit) **(20),** a cold storage unit (first utilization-side unit) **(30),** and a freeze storage unit (first utilization-side unit) **(40).** These units **(10, 20, 30, 40)** are connected by a gas-side interunit piping line **(51, 52)** and a liquid-side interunit piping line **(53, 54, 55)** to constitute a refrigerant circuit **(50)** in which a vapor compression refrigeration cycle is performed.

The gas-side interunit piping line **(51, 52)** is made up of a first gas-side interunit piping line (low pressure gas pipe) **(51)** and a second gas-side interunit piping line **(52).** The first gas-side interunit piping line **(51)** is connected to the outdoor unit **(10),** the cold storage unit **(30),** and the freeze storage unit **(40).** The second gas-side interunit piping line **(52)** is connected to the outdoor unit **(10)** and the indoor unit **(20).** On the other hand, the liquid-side interunit piping line **(53, 54, 55)** is made up of an integrated liquid pipe **(53),** a first branch liquid pipe **(54),** and a second branch liquid pipe (55). The integrated liquid pipe **(53)** is connected to the outdoor unit **(10).** The first branch liquid pipe **(54)** is a branch pipe diverged from the integrated liquid pipe **(53)** for connection to the cold storage unit **(30)** and the freeze storage unit **(40).** The second branch liquid pipe **(55)** is also a branch pipe diverged from the integrated liquid pipe **(53)** for connection to the indoor unit **(20).** Also note that the first branch liquid pipe **(54)** is made up of a cold storage-side first branch liquid pipe **(54a)** on the side of the cold storage unit **(30)** and a freeze storage-side first branch liquid pipe **(54b)** on the side of the freeze storage unit **(40).** In the present embodiment, the integrated liquid pipe **(53)** which is a portion of the liquid-side interunit piping line **(53, 54, 55)** on the side of the outdoor unit **(10)** is shared between the indoor unit **(20)** and the cold and freeze storage units **(30, 40),** in other words, the present embodiment employs an interunit piping line configuration of the three-pipe system.

The indoor unit **(20)** is configured switchably between a cooling operation mode and a heating operation mode and is installed, for example, in a store selling space or the like. In addition, the cold storage unit **(30)** is placed in a showcase used for cold storage and provides cooling of compartment air in the cold storage showcase. The freeze storage unit **(40)** is placed in a showcase used for freeze storage and provides cooling of compartment air in the freeze storage showcase. In the present embodiment, two indoor units **(20)** are connected in parallel, eight cold storage units **(30)** are connected in parallel, and a single freeze storage unit **(40)** is connected. However, for the sake of simplicity there are only shown in the figure one of the two indoor units **(20),** one of the eight cold storage units **(30),** and the one freeze storage unit **(40).**

And, the refrigerant circuit **(50)** includes a first system-side circuit **(50A)** used to provide cold/freeze storage and a second system-side circuit **(50B)** used to provide air conditioning. The first system-side circuit **(50A)** is made up of the outdoor unit **(10)** which is a heat source-side unit, the cold storage unit **(30)** which is a first utilization-side unit, and the freeze storage unit **(40)** which is a first utilization-side unit, and refrigerant is circulated in one direction therein. On the other hand, the second system-side circuit **(50B)** is made up of the outdoor unit **(10)** which is a heat source-side unit and the indoor unit **(20)** which is a second utilization-side unit, and refrigerant is circulated reversibly therein.

### OUTDOOR UNIT

The outdoor unit **(10)** is provided with an inverter compressor **(11A)** as a first compressor, a first non-inverter compressor **(11B)** as a second compressor, and a second non-inverter compressor **(11C)** as a third compressor. In addition to these compressors, the outdoor unit **(10)** further includes a first four-way valve **(12),** a second four-way valve **(13),** a third four-way valve **(14),** and an outdoor heat exchanger **(15)** which is a heat source-side heat exchanger. Also note that the outdoor heat exchanger **(15)** is, for example, a fin and tube heat exchanger of the cross fin type, and an outdoor fan **(16)** which is a heat source fan is disposed in vicinity to the outdoor heat exchanger **(15).**

The compressors **(11A, 11B, 11C)** are each formed, for example, by a hermetic, high pressure dome type scroll compressor. The inverter compressor **(11A)** is a variable capacity compressor the capacity of which can be gradually or continuously variable by inverter control of an electric motor. Each of the first and second non-inverter compressors **(11B, 11C)** is a fixed displacement compressor which is driven by an electric motor constantly at a fixed speed of rotation.

The inverter compressor **(11A),** the first non-inverter compressor **(11B),** and the second non-inverter compressor **(11C)** together constitute a compression mechanism **(11D, 11E)** of the refrigeration apparatus **(1).** The compression mechanism **(11D, 11E)** is made up of a compression mechanism **(11D)** of a first system and a compression mechanism **(11E)** of a second system. More specifically, the compression mechanism **(11D, 11E)** when in operation is configured as follows. On one hand, the inverter compressor **(11A)** and the first non-inverter compressor **(11B)** together constitute the compression mechanism **(11D)** of the first system while the second non-inverter compressor **(11C)** alone constitutes the compression mechanism **(11E)** of the second system. On the other hand, the inverter compressor **(11A)** alone constitutes the compression mechanism **(11D)** of the first system while the first non-inverter compressor **(11B)** and the second non-inverter compressor **(11C)** together constitute the compression mechanism **(11E)** of the second system. Stated another way, the inverter compressor **(11A)** is used fixedly by the first system-side circuit **(50A)** for cold/freeze storage and the second non-inverter compressor **(11c)** is used fixedly by the second system side circuit **(50B)** for air conditioning while the first non-inverter compressor **(11B)** can be used selectively by either the first system-side circuit **(50A)** or the second system-side circuit **(50B).**

The inverter compressor **(11A),** the first non-inverter compressor **(11B),** and the second non-inverter compressor **(11C)** have respective discharge pipes **(56a, 56b, 56c)** which are connected to a single high pressure gas pipe (discharge piping line) **(57).** The discharge pipe **(56b)** of the first non-inverter compressor **(11B)** is provided with a check valve **(CV1).** The discharge pipe **(56c)** of the second non-inverter compressor **(11C) is** provided with a check valve **(CV2).**

The high pressure gas pipe **(57)** is connected to a first port **(P1)** of the first four-way valve **(12).** The gas-side end of the outdoor heat exchanger **(15)** is connected to a second port **(P2)** of the first four-way valve **(12)** by an outdoor first gas pipe **(58a).** The second gas-side interunit piping line **(52)** is connected through an outdoor second gas pipe **(58b)** to a third port **(P3)** of the first four-way valve **(12).** A fourth port **(P4)** of the first four-way valve **(12)** is connected to the second four-way valve **(13).**

A first port **(P1)** of the second four-way valve **(13)** is connected to the discharge pipe **(56c)** of the second non-inverter compressor **(11C)** by an auxiliary gas pipe **(59).** A second port **(P2)** of the second four-way valve **(13)** is a closed port, in other word the second port **(P2)** is blocked. A third port **(P3)** of the second four-way valve **(13)** is connected to the fourth port **(P4)** of the first four-way valve **(12)** by a connection pipe **(60).** In addition, a suction pipe **(61c)** of the second non-inverter compressor **(11C)** is connected to a fourth port **(P4)** of the second four-way valve **(13).** Since the second port **(P2)** of the second four-way valve **(13)** is a closed port, this may allow use of a three-way valve as a substitute for the second four-way valve **(13).**

The first four-way valve **(12)** is configured such that it is switchable between (i) a first state (see solid line representation in the figure) that allows fluid communication between the first port **(P1)** and the second port **(P2),** and between the third port **(P3)** and the fourth port **(P4)** and (ii) a second state (see broken line representation in the figure) that allows fluid communication between the first port **(P1)** and the third port **(P3),** and between the second port **(P2)** and the fourth port (P4).

Likewise, the second four-way valve **(13)** is configured such that it is switchable between (i) a first state (see solid line representation in the figure) that allows fluid communication between the first port **(P1)** and the second port **(P2),** and between the third port **(P3)** and the fourth port (P4) and (ii) a second state (see broken line representation in the figure) that allows fluid communication between the first port **(P1)** and the third port (P3), and between the second port **(P2)** and the fourth port **(P4).**

One end of an outdoor liquid pipe (heat source-side liquid pipe) **(62)** which is a liquid line is connected to the liquid-side end of the outdoor heat exchanger **(15).** A receiver **(17)** for storing therein liquid refrigerant is disposed along the outdoor liquid pipe **(62),** and the other end of the outdoor liquid pipe **(62)** is connected to the integrated liquid pipe **(53)** of the liquid-side interunit piping line **(53, 54, 55).**

The receiver **(17)** is connected to the outdoor liquid pipe **(62)** through these pipes: a first inflow pipe **(63a)** which allows inflow of refrigerant from the outdoor heat exchanger **(15),** a first outflow pipe (63b) which allows outflow of refrigerant to the liquid-side interunit piping line **(53,** 54, **55),** a second inflow pipe (liquid refrigerant inflow passageway) **(63c)** which allows inflow of refrigerant from the liquid-side interunit piping line **(53, 54, 55),** and a second outflow pipe **(63d)** which allows outflow of refrigerant to the outdoor heat exchanger **(15).**

A suction pipe **(61a)** of the inverter compressor **(11A)** is connected through a low pressure gas pipe **(64)** of the first system-side circuit **(50A)** to the low pressure gas-side interunit piping line **(51).** A suction pipe **(61c)** of the second non-inverter compressor **(11C)** is connected through the first and second four-way valves **(12, 13)** to a low pressure gas pipe (either the outdoor second gas pipe (58b) or the outdoor first gas pipe **(58a))** of the second system-side circuit **(50B).** In addition, a suction pipe **(61b)** of the first non-inverter compressor **(11B)** is connected through the third four-way valve **(14)** to the suction pipe **(61a)** of the inverter compressor **(11A)** and to the suction pipe **(61c)** of the second non-inverter compressor **(11C).**

More specifically, a branch pipe **(61d)** is connected to the suction pipe **(61a)** of the inverter compressor **(11A)** and a branch pipe **(61e)** is connected to the suction pipe **(61c)** of the second non-inverter compressor **(11C).** And the branch pipe **(61d)** of the suction pipe **(61a)** of the inverter compressor **(11A)** is connected through a check valve **(CV3)** to the first port **(P1)** of the third four-way valve **(14);** the suction pipe **(61b)** of the first non-inverter compressor **(11B)** is connected to the second port **(P2)** of the third four-way valve **(14);** and the branch pipe **(61e)** of the suction pipe **(61c)** of the second non-inverter compressor **(11C)** is connected through a check valve **(CV4)** to the third port **(P3)** of the third four-way valve **(14).** The check valves **(CV3, CV4)** disposed respectively in the branch pipes **(61d, 61e)** permit only flow of refrigerant in the direction of the third four-way valve **(14)** while stopping reverse refrigerant flow. In addition, a high pressure introduction pipe (not shown) for introduction of the high pressure of the refrigerant circuit **(50)** is connected to the fourth port (P4) of the third four-way valve **(14).**

The third four-way valve **(14)** is configured such that it is switchable between (i) a first state (see solid line representation in the figure) that allows fluid communication between the first port **(P1)** and the second port **(P2),** and between the third port **(P3)** and the fourth port (P4) and (ii) a second state (see broken line representation in the figure) that allows fluid communication between the first port **(P1)** and the fourth port **(P4),** and between the second port (P2) and the third port (P3).

The first and second gas-side interunit piping lines **(51, 52),** and the integrated liquid pipe **(53)** of the liquid-side interunit piping line **(53, 54, 55)** are extended outside from the outdoor unit **(10),** and their associated stop valves **(18a, 18b, 18c)** are disposed within the outdoor unit **(10).**

Connected to the outdoor liquid pipe **(62)** is an auxiliary liquid pipe **(65)** (the second outflow pipe **(63d))** which bypasses the receiver **(17).** Refrigerant flows through the auxiliary liquid pipe (65), mainly during the heating operation mode. The auxiliary liquid pipe **(65)** is provided with an outdoor expansion valve **(19)** which is an expansion mechanism. A check valve **(CV5)** which permits only flow of refrigerant in the direction of the receiver **(17)** is disposed between the outdoor heat exchanger **(15)** and the receiver **(17)** in the outdoor liquid pipe **(62),** in other words the check valve **(CV5)** is disposed in the first inflow pipe **(63a).** The check valve **(CV5)** is positioned between a part of connection with the auxiliary liquid pipe **(65)** and the receiver **(17)** in the outdoor liquid pipe **(62).**

The outdoor liquid pipe **(62)** is diverged between the check valve **(CV5)** and the receiver **(17)** into a liquid branch pipe **(66)** (the second inflow pipe **(63c)),** and is connected to between the stop valve **(18c)** and a check valve **(CV7)** (to be described later) in the outdoor liquid pipe **(62).** The liquid branch pipe **(66)** is provided with a check valve **(CV6)** which permits flow of refrigerant towards the receiver **(17)** from a point of connection with the outdoor liquid pipe **(62)** between the stop valve **(18c)** and the check valve **(CV7).**

The liquid branch pipe **(66)** (the second inflow pipe **(63c))** is a liquid refrigerant inflow passageway which is connected to the outdoor liquid pipe **(62)** which is connected to the integrated liquid pipe **(53)** of the liquid-side interunit piping line **(53, 54, 55),** and to the inlet port of the receiver **(17).** The liquid refrigerant inflow passageway **(66)** is provided with a solenoid valve (switch valve) **(SV1)** capable of being on-off controlled. The solenoid valve **(SV1)** is disposed between a point of connection with the outdoor liquid pipe **(62)** in the liquid branch pipe **(66)** and the check valve **(CV6).**

The outdoor liquid pipe **(62)** is provided, between a point of connection with the auxiliary liquid pipe **(65)** and the stop valve **(18c),** with the check valve **(CV7),** in other words the check valve **(CV7)** is disposed in the first outflow pipe **(63b).** The check valve **(CV7)** permits only flow of refrigerant towards the stop valve **(18c)** from the receiver **(17).**

A liquid injection pipe **(67)** is connected to the liquid branch pipe **(66)** (the second inflow pipe **(63c))** and to the low pressure gas pipe **(64).** One end of the liquid injection pipe **(67)** is connected between a point of connection with the outdoor liquid pipe **(62)** and the solenoid valve **(SV1)** to the liquid branch pipe **(66)** (the second inflow pipe **(63c)).** In addition, the other end of the liquid injection pipe **(67)** is connected between the suction pipe **(61a)** of the inverter compressor **(11A)** and the stop valve **(18a)** to the low pressure gas pipe **(64).** The liquid injection pipe **(67)** is provided with a motor-operated expansion valve **(67a)** for flow rate control.

### INDOOR UNIT

The indoor unit **(20)** is provided with an indoor heat exchanger (air conditioning heat exchanger) **(21)** which is a second utilization-side heat exchanger and an indoor expansion valve **(22)** which is an expansion mechanism. The second gas-side interunit piping line **(52)** is connected to the gas side of the indoor heat exchanger **(21).** On the other hand, the second branch liquid pipe **(55)** of the liquid-side interunit piping line **(53, 54, 55)** is connected through the indoor expansion valve **(22)** to the liquid side of the indoor heat exchanger **(21).** Also note that the indoor heat exchanger **(21)** is, for example, a fin and tube heat exchanger of the cross fin type, and an indoor fan **(23)** which is a utilization-side fan is disposed in vicinity to the indoor heat exchanger **(21).** In addition, the indoor expansion valve **(22)** is formed by a motor-operated expansion valve.

### COLD STORAGE UNIT

The cold storage unit **(30)** is provided with a cold storage heat exchanger **(31)** which is a first utilization-side heat exchanger (evaporator) and a cold storage expansion valve **(32)** which is an expansion mechanism. The first branch liquid pipe **(54)** (the cold storage-side first branch liquid pipe **(54a))** of the liquid-side interunit piping line **(53, 54,** 55) is connected through the cold storage expansion valve **(32)** and then through a solenoid valve **(SV2)** to the liquid side of the cold storage heat exchanger **(31).** The solenoid valve **(SV2)** is employed to stop flow of refrigerant during the thermo-off (rest) operation mode. On the other hand, a cold storage-side branch gas pipe **(51a)** diverged from the first gas-side interunit piping line **(51)** is connected to the gas side of the cold storage heat exchanger **(31).**

The cold storage heat exchanger **(31)** is in fluid communication with the suction side of the inverter compressor (11A) while on the other hand the indoor heat exchanger **(21)** is in fluid communication with the suction side of the second non-inverter compressor **(11C)** during the cooling operation mode. The refrigerant pressure (evaporation pressure) of the cold storage heat exchanger **(31)** is lower than the refrigerant pressure (evaporation pressure) of the indoor heat exchanger **(21).** More specifically, the refrigerant evaporation temperature of the cold storage heat exchanger **(31)** is, for example, minus 10 degrees Centigrade and the refrigerant evaporation temperature of the indoor heat exchanger **(21)** is, for example, plus 5 degrees Centigrade, and the refrigerant circuit **(50)** constitutes a circuit in which refrigerant is evaporated at different temperatures.

Also note that the cold storage expansion valve **(32)** is a temperature-sensitive expansion valve and its temperature sensing bulb is mounted at the gas side of the cold storage heat exchanger **(31).** Accordingly, the degree of opening of the cold storage expansion valve **(32)** is controlled based on the temperature of refrigerant at the outlet side of the cold storage heat exchanger **(31).** The cold storage heat exchanger **(31)** is, for example, a fin and tube heat exchanger of the cross fin type, and a cold storage fan **(33)** which is a cooling fan is disposed in vicinity to the cold storage heat exchanger **(31).**

### FREEZE STORAGE UNIT

The freeze storage unit **(40)** is provided with a freeze storage heat exchanger **(41)** which is a first utilization-side heat exchanger, a freeze storage expansion valve **(42)** which is an expansion mechanism, and a booster compressor **(43)** which is a freeze storage compressor. The first branch liquid pipe **(54)** (the freeze storage-side first branch liquid pipe **(54b))** of the liquid-side interunit piping line **(53, 54, 55)** is connected through the freeze storage expansion valve **(42)** and then through the solenoid valve **(SV3)** to the liquid side of the freeze storage heat exchanger **(41).**

The gas side of the freeze storage heat exchanger **(41)** and the suction side of the booster compressor **(43)** are connected together by a connection gas pipe **(68).** Connected to the discharge side of the booster compressor **(43)** is the freeze storage-side branch gas pipe **(51b)** diverged from the first gas-side interunit piping line **(51).** The freeze storage-side branch gas pipe **(51b)** is provided with a check valve **(CV8)** and an oil separator **(44).** Connected to between the oil separator **(44)** and the connection gas pipe **(68)** is an oil return pipe **(69)** having a capillary tube **(45).**

In order that the refrigerant evaporation temperature of the freeze storage heat exchanger **(41)** may fall below the refrigerant evaporation temperature of the cold storage heat exchanger **(31),** the booster compressor **(43)** performs, together with the compression mechanism **(11D)** of the first system, two-stage compression of refrigerant. It is set such that the refrigerant evaporation temperature of the freeze storage heat exchanger **(41)** is, for example, minus 35 degrees Centigrade.

Also note that the freeze storage expansion valve **(42)** is a temperature-sensitive expansion valve and its temperature sensing bulb is mounted at the gas side of the freeze storage heat exchanger **(41).** The freeze storage heat exchanger **(41)** is, for example, a fin and tube heat exchanger of the cross fin type, and a freeze storage fan **(46)** which is a cooling fan is disposed in vicinity to the freeze storage heat exchanger **(41).**

In addition, a bypass pipe **(70)** having a check valve **(CV9)** is connected to the connection gas pipe **(68)** which is the suction side of the booster compressor **(43),** and to between the oil separator **(44)** and the check valve **(CV8)** in the freeze storage-side branch gas pipe **(51b).** The bypass pipe **(70)** is configured such that refrigerant is allowed to flow, bypassing the booster compressor **(43)** during the shutdown time (for example, when the booster compressor **(43)** fails to operate properly).

### CONTROL SYSTEM

The refrigerant circuit **(50)** is provided with various sensors and various switches. The high pressure gas pipe **(57)** of the outdoor unit **(10)** is provided with a high pressure sensor **(75)** which is a pressure detector means for detection of the pressure of high pressure refrigerant, and a discharge temperature sensor **(76)** which is a temperature detector means for detection of the temperature of high pressure refrigerant. The discharge pipe **(56c)** of the second non-inverter compressor **(11C)** is provided with a discharge temperature sensor **(77)** which is a temperature detector means for detection of the temperature of high pressure refrigerant. In addition, the discharge pipe **(56a)** of the inverter compressor **(11A),** the discharge pipe **(56b)** of the first non-inverter compressor **(11B),** and the discharge pipe **(56c)** of the second non-inverter compressor **(11C)** are each provided with a respective pressure switch **(78)** for high pressure protection which is placed in the opened state to stop its associated one of the compressors **(11A, 11B, 11C)** whenever the pressure of high pressure refrigerant reaches a predetermined value.

The suction pipe **(61a)** of the inverter compressor **(11A)** is provided with a low pressure sensor **(79)** which is a pressure detector means for detection of the pressure of low pressure refrigerant, and a suction temperature sensor **(81)** which is a temperature detector means for detection of the temperature of low pressure refrigerant. Likewise, the suction pipe (61c) of the second non-inverter compressor (11C) is provided with a low pressure sensor (80) and a suction temperature sensor **(82).**

The outdoor heat exchanger **(15)** is provided with an outdoor heat exchange sensor **(83)** which is a temperature detector means for detection of the temperature of evaporation or condensation which is the temperature of refrigerant in the outdoor heat exchanger **(15).** In addition, the outdoor unit **(10)** is provided with an outside air temperature sensor **(84)** which is a temperature detector means for detection of the temperature of outdoor air.

The indoor heat exchanger **(21)** is provided with an indoor heat exchange sensor **(85)** which is a temperature detector means for detection of the temperature of evaporation or condensation which is the temperature of refrigerant in the indoor heat exchanger **(21).** The indoor heat exchanger **(21)** is also provided, at its gas side, with a gas temperature sensor **(86)** which is a temperature detector means for detection of the temperature of gas refrigerant. In addition, the indoor unit **(20)** is provided with a room temperature sensor **(87)** which is a temperature detector means for detection of the temperature of indoor air.

The cold storage unit **(30)** is provided with a cold storage temperature sensor **(88)** which is a temperature detector means for detection of the compartment temperature of the cold storage showcase. The freeze storage unit **(40)** is provided with a freeze storage temperature sensor **(89)** which is a temperature detector means for detection of the compartment temperature of the freeze storage showcase. In addition, the booster compressor **(43)** has, at its discharge side, a pressure switch **(90)** for high pressure protection which is placed in the opened state to stop the booster compressor **(43)** whenever the pressure of discharge refrigerant reaches a predetermined value.

Output signals from these various sensors and switches are fed to a controller (control means) **(95).** The controller **(95)** is configured such that it controls the operation of the refrigerant circuit **(50)** whereby the refrigerant circuit **(50)** is operated selectively in either one of eight different operation modes (to be described later). And, in operation, the controller **(95)** provides: control of the start, stop, and capacity of the inverter compressor **(11A);** control of the start and stop of the first and second non-inverter compressors **(11B, 11C);** and control of the adjustment of the degree of opening of the outdoor and indoor expansion valves **(19, 22).** In addition, the controller **(95)** provides control of the switching of each of the four-way valves **(12, 13, 14)** and control of the degree of opening of the motor-operated expansion valve **(67a)** of the liquid injection pipe **(67).**

The controller **(95)** provides also control of the on-off of the solenoid valve **(SV1)** of the liquid branch pipe **(66)** which is a liquid refrigerant inflow passageway in response to the operation state. More specifically, the controller **(95)** provides the following control when performing, without the use of the outdoor heat exchanger **(15),** a heating operation mode of 100% heat recovery in which the indoor heat exchanger **(21)** functions as a condenser and the cold and freeze storage heat exchangers **(31, 42)** function as evaporators.

In the first place, during the 100% heat recovery heating operation mode, the controller **(95)** performs the following control on the solenoid valve **(SV1).** That is, when the discharge pressure of the compression mechanism **(11D, 11E)** is below a predetermined value, the solenoid valve **(SV1)** is placed in the closed state. On the other hand, when the discharge pressure of the compression mechanism **(11D, 11E)** increases to equal or exceed the predetermined value, the solenoid valve **(SV1)** is placed in the opened state. In addition, during the 100% heat recovery heating operation mode, the controller **(95)** further performs the following control on the solenoid valve **(SV1).** That is, when the amount of liquid refrigerant accumulated in the indoor heat exchanger **(21)** and the liquid-side interunit piping line **(53, 54, 55)** is below a predetermined value, the solenoid valve **(SV1)** is placed in the closed state. On the other hand, when it is estimated that the liquid refrigerant amount accumulated reaches the predetermined value or above, the solenoid valve **(SV1)** is placed in the opened state. Furthermore, during the 100% heat recovery heating operation mode, the controller **(95)** provides the following control on the solenoid valve **(SV1).** That is, when the temperature of liquid refrigerant in the indoor heat exchanger **(21)** is below a predetermined value, the solenoid valve **(SV1)** is placed in the closed state. On the other hand, when the liquid refrigerant temperature increases to equal or exceed the predetermined value, the solenoid valve **(SV1)** is placed in the opened state. Besides, during the 100% heat recovery heating operation mode, the controller **(95)** performs the following control on the solenoid valve **(SV1).** That is, when the pressure of liquid refrigerant in the liquid-side interunit piping line **(53, 54, 55)** is below a predetermined value, the solenoid valve **(SV1)** is placed in the closed state. On the other hand, when the liquid refrigerant pressure increases to equal or exceed the predetermined value, the solenoid valve **(SV1)** is placed in the opened state.

Also note that during the cooling operation mode (to be described later) and when the compression mechanism **(11D, 11E)** is placed at rest, the controller **(95)** provides control so that the solenoid valve **(SV1)** is placed in the closed state. In addition, during the heating operation mode in which the outdoor heat exchanger **(15)** is used as an evaporator, the controller **(95)** provides control so that the solenoid valve **(SV1)** is placed in the opened state.

### RUNNING OPERATION

Next, description will be made regarding each of operation modes of the running operation of the refrigeration apparatus **(1).** The refrigeration apparatus **(1)** is configured such that it is selectively settable to operate in either one of, for example, eight different operation modes, in the present embodiment. More specifically, the refrigeration apparatus **(1)** is so configured as to be able to selectively perform:
(i) a cooling operation mode that provides only indoor space cooling by the indoor unit **(20);**
(ii) a refrigeration operation mode that provides only compartment cooling by the cold and freeze storage units **(30, 40);**
(iii) a first cooling/refrigeration operation mode that provides indoor space cooling by the indoor unit **(20)** simultaneously with compartment cooling by the cold and freeze storage units **(30, 40);**
(iv) a second cooling/refrigeration operation mode that is performed if the cooling capacity of the indoor unit **(20)** is insufficient in the first cooling/refrigeration operation mode;
(v) a heating operation mode that provides only indoor space heating by the indoor unit **(20);**
(vi) a first heating/refrigeration operation mode that provides, without the use of the outdoor heat exchanger **(15),** indoor space heating by the indoor unit **(20)** and compartment cooling by the cold and freeze storage units **(30, 40)** with 100% heat recovery;
(vii) a second heating/refrigeration operation mode that is performed if the heating capacity of the indoor unit **(20)** is in surplus in the first heating/refrigeration operation mode; or
(viii) a third heating/refrigeration operation mode that is performed if the heating capacity of the indoor unit **(20)** is insufficient in the first heating/refrigeration operation mode.

In the following, each of the above operation modes is described more specifically.

### COOLING OPERATION MODE

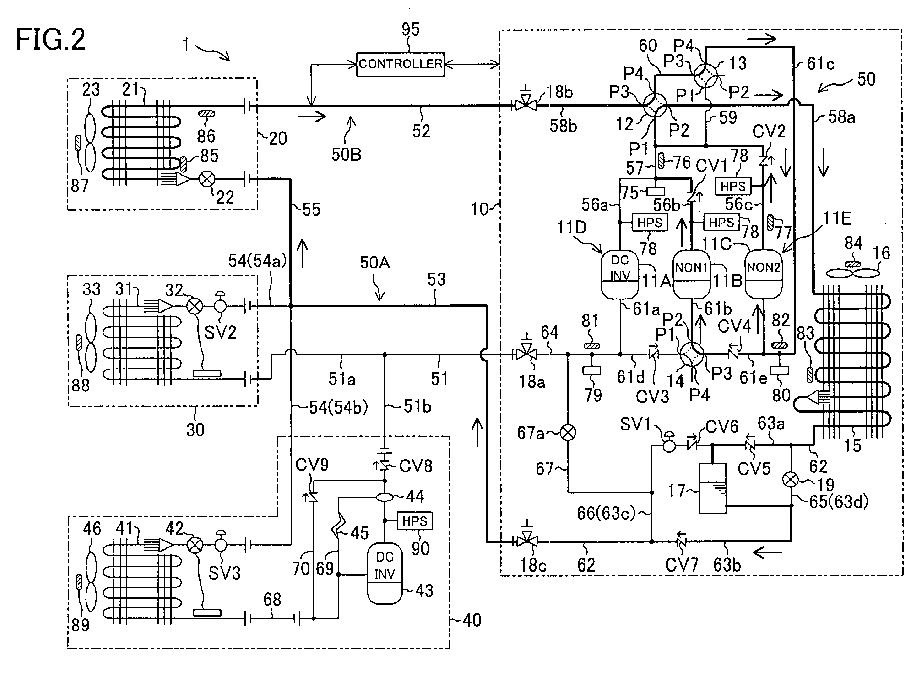

The cooling operation mode is an operation mode that provides only indoor space cooling by the indoor unit **(20).** During the cooling operation mode, the inverter compressor **(11A)** alone constitutes the compression mechanism **(11D)** of the first system while the first non-inverter compressor **(11B)** and the second non-inverter compressor **(11C)** together constitute the compression mechanism **(11E)** of the second system, as shown in Figure **2****.** And, only the first and second non-inverter compressors **(11B, 11C),** i.e., the compression mechanism **(11E)** of the second system, are activated.

In addition, as indicated by solid line representation in Figure 2, the first and second four-way valves **(12, 13)** each change state to the first state while, on the other hand, the third four-way valve **(14)** changes states to the second state. In addition, the outdoor expansion valve **(19),** the motor-operated expansion valve **(67a)** of the liquid injection pipe **(67),** the solenoid valve **(SV1)** of the liquid branch pipe **(66)** (the second inflow pipe **(63c))** which is a liquid refrigerant inflow passageway, the solenoid valve **(SV2)** of the cold storage unit **(30),** and the solenoid valve **(SV3)** of the freeze storage unit **(40)** are all placed in the closed state.

In this state, discharged refrigerant from the first and second non-inverter compressors **(11B, 11C)** flows through the first four-way valve **(12)** and then through the outdoor first gas pipe **(58a)** into the outdoor heat exchanger **(15),** and is condensed to liquid refrigerant. The condensed liquid refrigerant flows through the outdoor liquid pipe **(62),** passes through the receiver **(17),** then through the integrated liquid pipe **(53)** of the liquid-side interunit piping line **(53, 54, 55),** and then through the second branch liquid pipe **(55),** enters the indoor heat exchanger (21) by way of the indoor expansion valve **(22),** and is evaporated to gas refrigerant. The evaporated gas refrigerant passes through the second gas-side interunit piping line **(52),** then through the outdoor second gas pipe **(58b),** then through the first four-way valve **(12),** and then through the second four-way valve **(13)** and thereafter flows through the suction pipe (61c) of the second non-inverter compressor **(11C).** A portion of this low pressure gas refrigerant is returned back to the second non-inverter compressor (11C) while, on the other hand, the rest is diverged from the suction pipe **(61c)** of the second non-inverter compressor **(11C)** to the branch pipe **(61e)** and is retuned back to the first non-inverter compressor **(11B)** by way of the third four-way valve **(14).** Repetition of such refrigerant circulation effects cooling of the store space.

In this operation state, the start/stop of the first and second non-inverters **(11B, 11C)** and the degree of opening of the indoor expansion valve **(22)** are controlled in response to the indoor cooling load. Only one of the compressors **(11B, 11C)** may be put in operation.

### REFRIGERATION OPERATION MODE

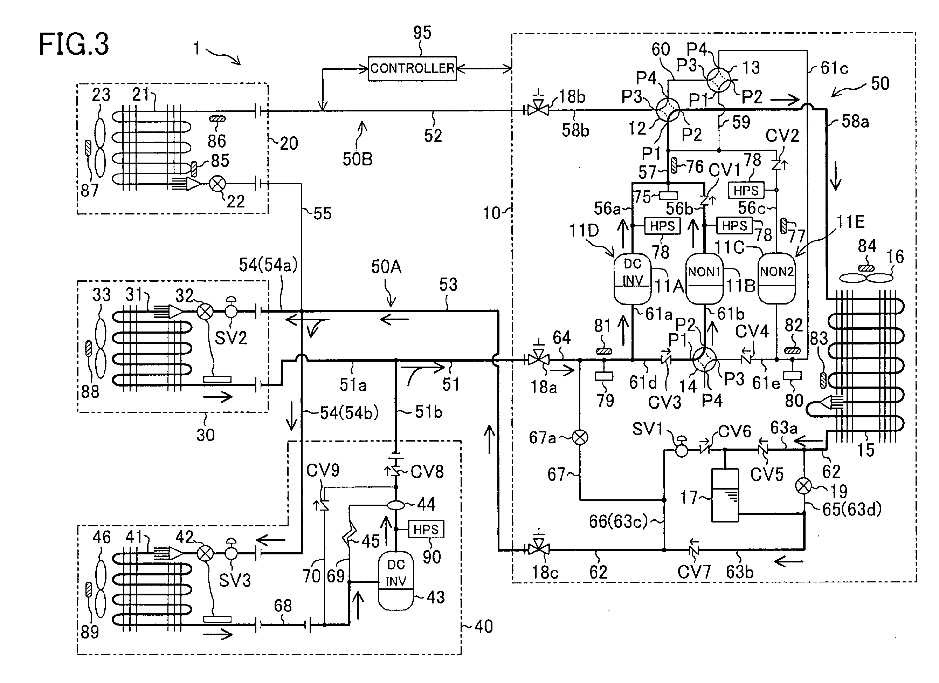

The refrigeration operation mode is an operation mode that provides only compartment cooling by the cold and freeze storage units **(30, 40).** During the refrigeration operation mode, the inverter compressor **(11A)** and the first non-inverter compressor **(11B)** together constitute the compression mechanism **(11D)** of the first system while, on the other hand, the second non-inverter compressor **(1C)** alone constitutes the compression mechanism **(11E)** of the second system, as shown in Figure **3****.** And, the inverter compressor **(11A)** and the first non-inverter compressor **(11B),** i.e., the compression mechanism **(11D)** of the first system, are activated together with the booster compressor **(43),** and the second non-inverter compressor **(11C)** is placed at rest.

In addition, as indicated by solid line representation in Figure **3****,** the first and second four-way valves **(12, 13)** each change state to the first state and the third four-way valve **(14)** also changes state to the first state. Furthermore, the solenoid valve **(SV2)** of the cold storage unit **(30)** and the solenoid valve **(SV3)** of the freeze storage unit **(40)** are placed in the opened state while, on the other hand, the solenoid valve **(SV1)** of the liquid branch pipe **(66)** (the second inflow pipe **(63c))** which is a liquid refrigerant inflow passageway, the outdoor expansion valve **(19),** and the indoor expansion valve **(22)** are placed in the closed state. In addition, in response to the operation state, the motor-operated expansion valve **(67a)** of the liquid injection pipe **(67)** is set either in the fully closed state or to a predetermined degree of opening that allows liquid refrigerant to flow at a predetermined flow rate.

In this state, discharged refrigerant from the inverter and first non-inverter compressors **(11A, 11B)** flows through the first four-way valve **(12)** and then through the outdoor first gas pipe **(58a)** into the outdoor heat exchanger **(15),** and is condensed to liquid refrigerant. The condensed liquid refrigerant flows through the outdoor liquid pipe **(62),** passes through the receiver **(17),** and is diverged from the integrated liquid pipe **(53)** of the liquid-side interunit piping line **(53, 54, 55)** into the cold storage-side first branch liquid pipe **(54a)** and into the freeze storage-side first branch liquid pipe **(54b).**

Liquid refrigerant flowing through the cold storage-side first branch liquid pipe **(54a)** flows through the cold storage expansion valve **(32)** into the cold storage heat exchanger **(31),** is evaporated to gas refrigerant, and then flows through the cold storage-side branch gas pipe **(51a).** On the other hand, liquid refrigerant flowing through the freeze storage-side first branch liquid pipe **(54b)** flows through the freeze storage expansion valve **(42)** into the freeze storage heat exchanger **(41),** is evaporated to gas refrigerant.' The gas refrigerant evaporated in the freeze storage heat exchanger **(41)** is drawn into and compressed in the booster compressor **(43),** and discharged to the freeze storage-side branch gas pipe **(51b).**

The flow of the gas refrigerant evaporated in the cold storage heat exchanger **(31)** and the flow of the gas refrigerant discharged from the booster compressor **(43)** join together in the first gas-side interunit piping line **(51).** The combined refrigerant is then returned back through the low pressure gas pipe **(64)** to the inverter compressor **(11A)** and the first non-inverter compressor **(11B).** Repetition of such refrigerant circulation effects cooling of the cold storage showcase compartment and cooling of the freeze storage showcase compartment.

The pressure of refrigerant in the freeze storage heat exchanger **(41)** falls below the pressure of refrigerant in the cold storage heat exchanger **(31)** since the refrigerant is sucked into the booster compressor **(43).** As a result, for example, the temperature (evaporation temperature) of refrigerant in the freeze storage heat exchanger **(41)** is minus 35 degrees Centigrade while, on the other hand, the temperature (evaporation temperature) of refrigerant in the cold storage heat exchanger **(31)** is minus 10 degrees Centigrade.

During the refrigeration operation mode, the start/stop of the first non-inverter compressor **(11B)** and either the start/stop or the capacity of the inverter compressor **(11A)** are controlled, for example, based on LP (the pressure of low pressure refrigerant) detected by the low pressure sensor **(79),** whereby the refrigeration apparatus **(1)** operates in response to the refrigeration load.

For example, when effecting control of increasing the capacity of the compression mechanism **(2D),** the inverter compressor **(11A)** is first activated, with the first non-inverter compressor **(11B)** placed at rest. If, after the capacity of the inverter compressor **(11A)** increases to a maximum, there is a further increase in the load, then the capacity of the inverter compressor **(1A)** is decreased to a minimum simultaneously with activation of the first non-inverter compressor **(11B).** Thereafter, if the load increases still further, the capacity of the inverter compressor **(11A)** is increased while the first non-inverter compressor **(11B)** still remains activated. On the other hand, when effecting control of reducing the compressor capacity, the opposite operation to the compressor capacity increasing control is carried out.

The degree of opening of the cold storage and freeze storage expansion valves **(32, 42)** is superheat controlled by their temperature-sensing bulbs. This is the same as in each of the following operation modes.

### FIRST COOLING/REFRIGERATION OPERATION MODE

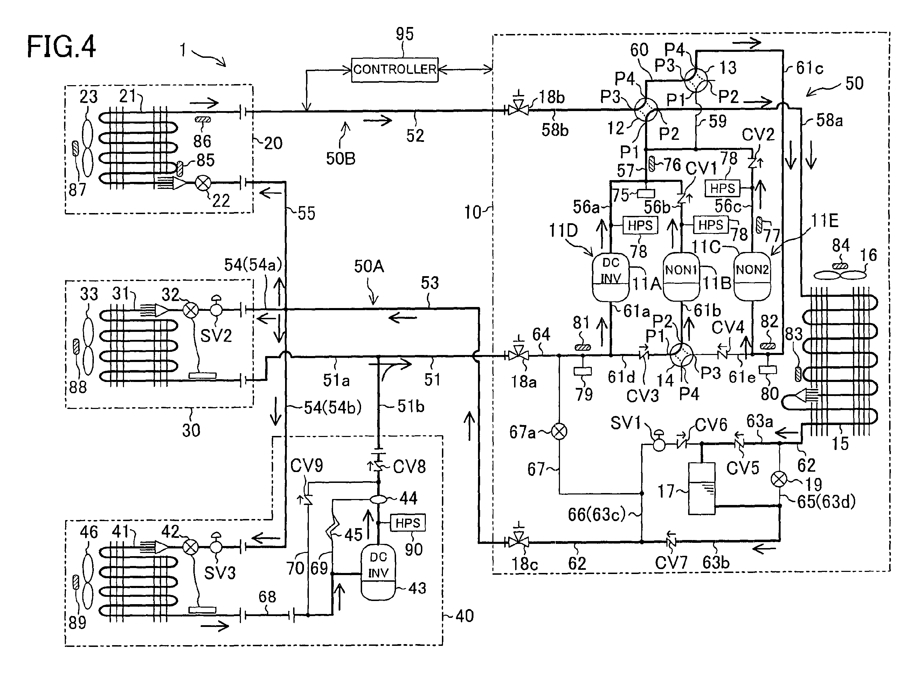

The first cooling/refrigeration operation mode is an operation mode that provides indoor space cooling by the indoor unit **(20)** simultaneously with compartment cooling by the cold and freeze storage units **(30, 40).** As shown in Figure **4****,** during the first cooling/refrigeration operation mode, the inverter compressor **(11A)** and the first non-inverter compressor **(11B)** together constitute the compression mechanism **(11D)** of the first system while, on the other hand, the second non-inverter compressor **(11C)** alone constitutes the compression mechanism **(11E)** of the second system. And, the inverter compressor **(11A),** the first non-inverter compressor **(11B),** and the second non-inverter compressor **(11C)** are all activated and, in addition, the booster compressor **(43)** is also activated.

In addition, as indicated by solid line representation in Figure **4****,** the first four-way valve **(12),** the second four-way valve **(13),** and the third four-way valve **(14)** each change state to the first state. Further, the solenoid valve **(SV2)** of the cold storage unit **(30)** and the solenoid valve **(SV3)** of the freeze storage unit **(40)** are placed in the opened state while, on the other hand, the solenoid valve **(SV1)** of the liquid branch pipe (66) (the second inflow pipe **(63c))** which is a liquid refrigerant inflow passageway and the outdoor expansion valve **(19)** are placed in the closed state. In addition, in response to the operation state, the motor-operated expansion valve **(67a)** of the liquid injection pipe **(67)** is set either in the fully closed state or to a predetermined degree of opening that allows liquid refrigerant to flow to the suction side of the compression mechanism **(11D)** at a predetermined flow rate.

In this state, the flow of discharged refrigerant from the inverter compressor **(11A),** the flow of discharged refrigerant from the first non-inverter compressor **(11B),** and the flow of discharged refrigerant from the second non-inverter compressor **(11C)** join together in the high pressure gas pipe **(57).** Thereafter, the combined refrigerant flows through the first four-way valve **(12)** and then through the outdoor first gas pipe **(58a)** into the outdoor heat exchanger **(15),** and is condensed to liquid refrigerant. The condensed liquid refrigerant flows through the outdoor liquid pipe **(62),** passes through the receiver **(17),** and flows through the integrated liquid pipe **(53)** of the liquid-side interunit piping line **(53, 54, 55).**

A portion of the liquid refrigerant flowing through the integrated liquid pipe **(53)** of the liquid-side interunit piping line **(53, 54, 55)** diverges therefrom into the second branch liquid pipe **(55),** flows through the indoor expansion valve **(22)** into the indoor heat exchanger **(21),** and is evaporated to gas refrigerant. The evaporated gas refrigerant passes through the second gas-side interunit piping line **(52),** then through the outdoor second gas pipe **(58b),** then through the first four-way valve **(12),** then through the second four-way valve **(13),** and then through the suction pipe **(61c),** and is returned back to the second non-inverter compressor **(11C).**

On the other hand, the other portion of the liquid refrigerant flowing through the integrated liquid pipe **(53)** of the liquid-side interunit piping line **(53, 54, 55)** diverges therefrom into the cold storage-side first branch liquid pipe **(54a)** and into the freeze storage-side first branch liquid pipe **(54b).** The liquid refrigerant flowing through the cold storage-side first branch liquid pipe **(54a)** flows through the cold storage expansion valve **(32)** into the cold storage heat exchanger **(31),** is evaporated to gas refrigerant, and flows through the cold storage-side branch gas pipe **(51a).** Meanwhile, the liquid refrigerant flowing through the freeze storage-side first branch liquid pipe **(54b)** flows through the freeze storage expansion valve **(42)** into the freeze storage heat exchanger **(41),** and is evaporated to gas refrigerant. The gas refrigerant evaporated in the freeze storage heat exchanger **(41)** is drawn into and compressed by the booster compressor **(43)** and then discharged to the freeze storage-side branch gas pipe **(51b).**

The flow of the gas refrigerant evaporated in the cold storage heat exchanger **(31)** and the flow of the gas refrigerant discharged from the booster compressor **(43)** join together in the first gas-side interunit piping line **(51).** Thereafter, the combined gas refrigerant is returned back through the low pressure gas pipe **(64)** to the inverter compressor **(11A)** and the first non-inverter compressor **(11B).**

Repetition of such refrigerant circulation effects cooling of the store space simultaneously with cooling of the cold storage showcase compartment and cooling of the freeze storage showcase compartment.

### SECOND COOLING/REFRIGERATION OPERATION MODE

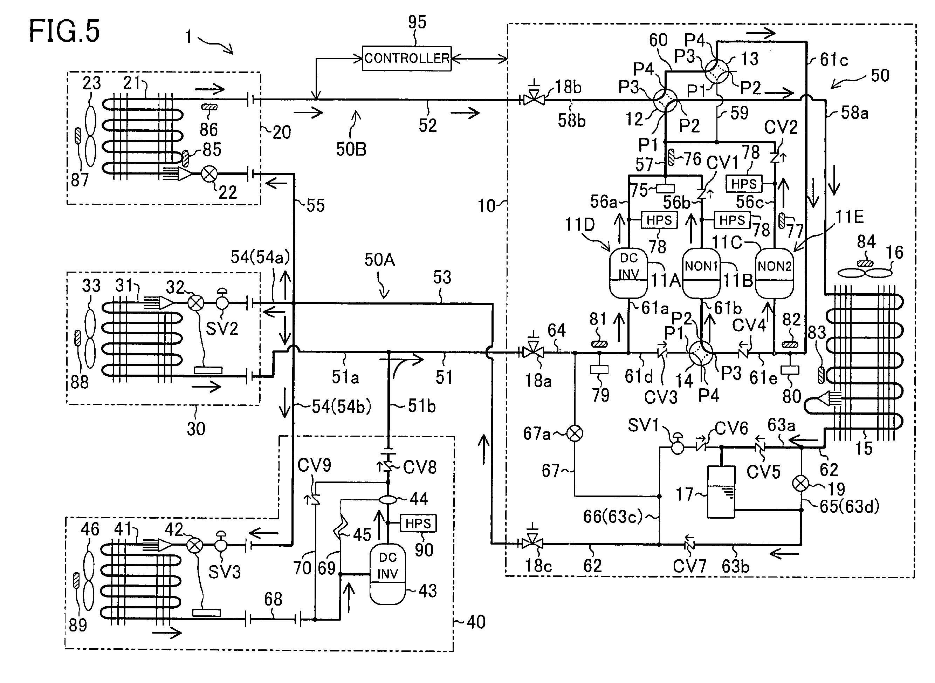

The second cooling/refrigeration operation mode is an operation mode that is performed if the cooling capacity of the indoor unit **(20)** is insufficient in the first cooling/refrigeration operation mode. In the second cooling/refrigeration operation mode, the first non-inverter compressor **(11B)** is switched to the air conditioning side. As shown in Figure 5, the setting in the second cooling/refrigeration operation mode is basically the same as that in the first cooling/refrigeration operation mode, with the exception that the third four-way valve **(14)** changes state to the second state.

Accordingly, during the second cooling/refrigeration operation mode, discharged refrigerant from the inverter compressor **(11A),** the first non-inverter compressor **(11B),** and the second non-inverter compressor **(11C)** is condensed in the outdoor heat exchanger **(15)** and evaporated in the indoor heat exchanger **(21),** the cold storage heat exchanger (31), and the freeze storage heat exchanger **(41),** in the same way as the first cooling/refrigeration operation mode.

Then, the refrigerant evaporated in the indoor heat exchanger **(21)** is returned back to the first and second non-inverter compressors **(11B, 11C)** while, on the other hand, the refrigerant evaporated in the cold storage heat exchanger **(31)** and the freeze storage heat exchanger **(41)** is returned back to the inverter compressor **(11A).** By use of these two compressors **(11B, 11C)** on the air conditioning side, the lack of cooling capacity is compensated.

### HEATING OPERATION MODE

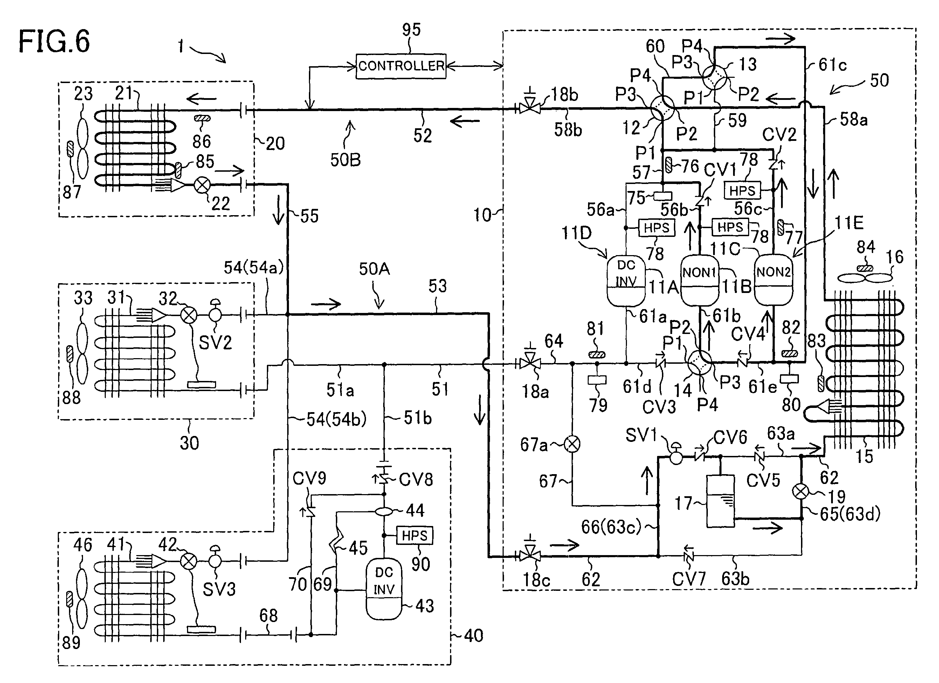

The heating operation mode is an operation mode that provides only indoor space heating by the indoor unit **(20).** During the heating operation mode, the inverter compressor **(11A)** alone constitutes the compression mechanism **(11D)** of the first system while, on the other hand, the first and second non-inverter compressors **(11B, 11C)** together constitute the compression mechanism **(11E)** of the second system, as shown in Figure **6****.** And, only the first and second non-inverter compressors **(11B, 11C),** i.e., the compression mechanism **(11E)** of the second system, are activated.

Further, as indicated by solid line representation in Figure **6****,** the first four-way valve **(12)** changes state to the second state; the second four-way valve **(13)** changes state to the first state; and the third four-way valve **(14)** changes state to the second state. On the other hand, the motor-operated expansion valve **(67a)** of the liquid injection pipe **(67),** the solenoid valve **(SV2)** of the cold storage unit **(30),** and the solenoid valve **(SV3)** of the freeze storage unit **(40)** are all placed in the closed state. Furthermore, the indoor expansion valve **(22)** is fully opened; the solenoid valve **(SV1)** of the liquid branch pipe **(66)** (the second inflow pipe **(63c))** which is a liquid refrigerant inflow passageway is opened; and the outdoor expansion valve **(19)** is controlled to a predetermined degree of opening.

In this state, discharged refrigerant from the first non-inverter compressor **(11B)** and the second non-inverter compressor **(11C)** flows through the first four-way valve **(12),** then through the outdoor second gas pipe **(58b),** and then through the second gas-side interunit piping line **(52)** into the indoor heat exchanger **(21),** and is condensed to liquid refrigerant. The condensed liquid refrigerant flows through the second branch liquid pipe **(55)** of the liquid-side interunit piping line **(53, 54, 55)** and then through the integrated liquid pipe **(53)** of the liquid-side interunit piping line **(53, 54, 55),** passes through the liquid branch pipe **(66)** (the second inflow pipe **(63c))** which is a liquid refrigerant inflow passageway, and flows into the receiver **(17).** Thereafter, the liquid refrigerant flows through the outdoor expansion valve **(19)** of the auxiliary liquid pipe **(65)** into the outdoor heat exchanger **(15),** and is evaporated to gas refrigerant. The evaporated gas refrigerant passes through the outdoor first gas pipe **(58a),** then through the first four-way valve **(12),** and then through the second four-way valve **(13),** flows through the suction pipe **(61c)** of the second non-inverter compressor **(1C),** and is returned back to the first and second non-inverter compressors **(11B, 11C).** Repetition of such refrigerant circulation effects heating of the store space.

Only one of the compressors **(11B, 11C)** may be put in operation, as in the cooling operation mode.

### FIRST HEATING/REFRIGERATION OPERATION MODE

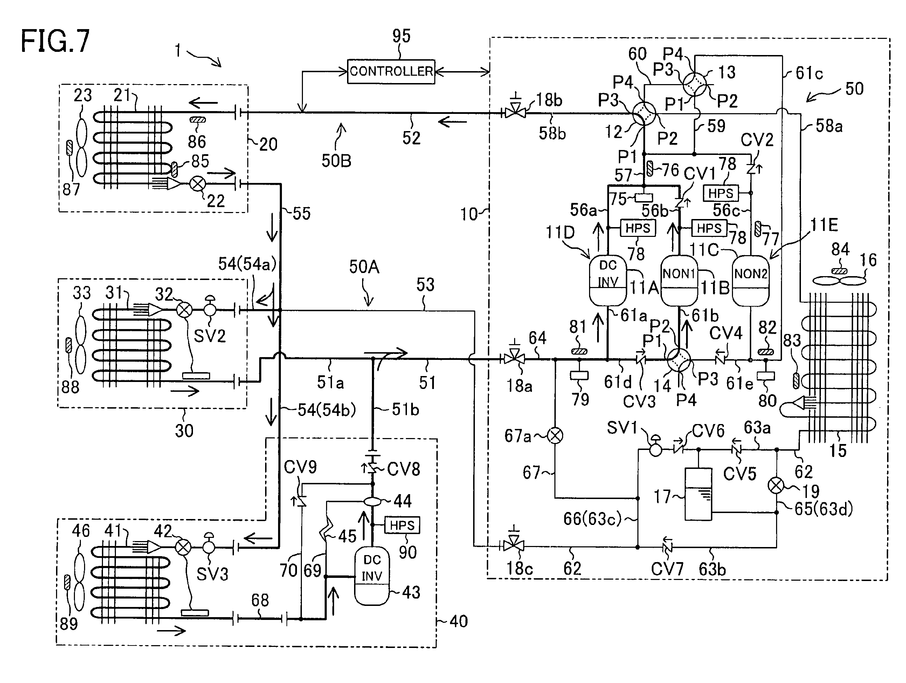

The first heating/refrigeration operation mode is a 100% heat recovery operation mode that provides space heating by the indoor unit **(20)** and compartment cooling by the cold and freeze storage units **(30, 40),** without the use of the outdoor heat exchanger **(15).** In the first heating/refrigeration operation mode, as shown in Figure 7, the inverter compressor **(11A)** and the first non-inverter compressor **(11B)** together constitute the compression mechanism **(11D)** of the first system while, on the other hand, the second non-inverter compressor **(11C)** alone constitutes the compression mechanism **(11E)** of the second system. And, the inverter compressor **(11A)** and the first non-inverter compressor **(11B)** are activated, and the booster compressor **(43)** is also activated. The second non-inverter compressor **(11C)** is placed at rest.

Further, as indicated by solid line representation in Figure **7****,** the first four-way valve **(312)** changes state to the second state while, on the other hand, the second and third four-way valves **(13, 14)** each change state to the first state. Furthermore, the solenoid valve **(SV2)** of the cold storage unit **(30)** and the solenoid valve **(SV3)** of the freeze storage unit **(40)** are opened while, on the other hand, the outdoor expansion valve **(19)** is closed. In addition, the solenoid valve **(SV1)** of the liquid branch pipe **(66)** (the second inflow pipe **(63c))** which is a liquid refrigerant inflow passageway is basically placed in the closed state unless: the discharge pressure of the compression mechanism **(11D)** increases to equal or exceed a predetermined value; it is estimated that the amount of liquid refrigerant accumulated in the indoor heat exchanger **(21)** and the liquid-side interunit piping line **(53, 54, 55)** reaches a predetermined value or above; and the temperature of liquid refrigerant in the indoor heat exchanger **(21)** increases to equal or exceed a predetermined value.

In this state, discharged refrigerant from the inverter compressor **(11A)** and the first non-inverter compressor **(11B)** flows through the first four-way valve **(12),** then through the outdoor second gas pipe **(58b),** and then through the second gas-side interunit piping line **(52)** into the indoor heat exchanger **(21),** and is condensed to liquid refrigerant. The condensed liquid refrigerant is diverged, before the integrated liquid pipe **(53),** from the second branch liquid pipe **(55)** of the liquid-side interunit piping line **(53, 54, 55)** into the cold storage-side first branch liquid pipe **(54a)** and into the freeze storage-side first branch liquid pipe **(54b).**

The liquid refrigerant flowing through the cold storage-side first branch liquid pipe **(54a)** flows through the cold storage expansion valve **(32)** into the cold storage heat exchanger **(31),** is evaporated to gas refrigerant, and flows through the cold storage-side branch gas pipe **(51a).** Meanwhile, the liquid refrigerant flowing through the freeze storage-side first branch liquid pipe **(54b)** flows through the freeze storage expansion valve **(42)** into the freeze storage heat exchanger **(41),** and is evaporated to gas refrigerant. The gas refrigerant evaporated in the freeze storage heat exchanger **(41)** is drawn into and compressed in the booster compressor **(43)** and then discharged to the freeze storage-side branch gas pipe **(51b).**

The flow of the gas refrigerant evaporated in the cold storage heat exchanger **(31)** and the flow of the gas refrigerant discharged from the booster compressor **(43)** join together in the first gas-side interunit piping line **(51).** The combined refrigerant is then returned back through the low pressure gas pipe **(64)** to the inverter compressor **(11A)** and the first non-inverter compressor **(11B).** Repetition of such refrigerant circulation effects heating of the store space simultaneously with cooling of the cold storage showcase compartment and cooling of the freeze storage showcase compartment. During the first heating/refrigeration operation mode, the cooling capacity (the amount of heat of evaporation) of the cold and freeze storage units **(30, 40)** and the heating capacity (the amount of heat of condensation) of the indoor unit **(20)** are in balance with each other whereby 100% heat recovery is accomplished.

Also note that if the amount of liquid refrigerant flowing to the first branch liquid pipe **(54)** from the second branch liquid pipe **(55)** is insufficient, liquid refrigerant is drawn into the first branch liquid pipe **(54)** from the receiver **(17)** by way of the integrated liquid pipe **(53)** of the liquid-side interunit piping line **(53, 54, 55).**

On the other hand, the pressure within the receiver **(17)** drops when the temperature of outside air is low. Accordingly, if the solenoid valve **(SV1)** of the liquid branch pipe **(66)** as a liquid refrigerant inflow passageway is not placed in the closed state, this may lead to the result that the pressure of the integrated liquid pipe **(53)** of the liquid-side interunit piping line **(53, 54, 55)** also drops, and the liquid refrigerant condensed in the indoor heat exchanger **(21)** flows neither into the cold storage heat exchanger **(31)** nor into the freeze storage heat exchanger **(41)** but enters the receiver **(17)** by way of the integrated liquid pipe **(53)** from the second branch liquid pipe **(55).** In the present embodiment, however, it is possible to prevent inflow of liquid refrigerant to the receiver **(17)** by placing the solenoid valve **(SV1)** of the liquid branch pipe **(66)** in the closed state. In other words, the pressure of the integrated liquid pipe **(53)** can be prevented from falling to a lower level by placing the solenoid valve **(SV1)** in the closed state. This ensures that liquid refrigerant exiting the indoor heat exchanger **(21)** is introduced into the cold storage heat exchanger **(31)** and into the freeze storage heat exchanger **(41).** In addition, it is ensured that the drop in capacity due to the insufficiency in the flow rate of liquid refrigerant in the cold and the freeze storage heat exchangers **(31, 41)** is prevented.

On the other hand, when one of the two indoor units **(20)** is placed in the thermo-off state (which is a state that performs an air supply operation in which refrigerant either stops circulating through the indoor heat exchanger **(21)** or is allowed to flow therethrough, but in very small amount) during the 100% heat recovery operation, the indoor expansion valve **(22)** connected to the indoor heat exchanger **(21)** is either placed in the fully closed state or set to a very small degree of opening even when opened. At this time, the other indoor unit **(20)** in operation continuously provides space heating, and discharged refrigerant from the compression mechanism **(11D)** is supplied also to the thermo-offed indoor heat exchanger **(21).** However, in the thermo-offed indoor heat exchanger **(21),** little refrigerant flows, resulting in gradual accumulation of refrigerant therein.

If, at this time, there is a request that the cooling capacity of the cold and freeze storage heat exchangers **(31, 41)** be increased, an operation to increase the capacity of the compression mechanism **(11D)** is carried out. As a result, the discharge pressure of the compression mechanism **(11D)** increases, and if the solenoid valve **(SV1)** of the liquid branch pipe **(66)** remains closed, the discharge pressure increases too much. In the present invention, however, because of the operation to place the solenoid valve **(SV1)** in the opened state, it becomes possible to permit escape of the liquid refrigerant to the receiver **(17)** whereby the discharge pressure of the compressor is prevented from increasing too much.

In addition, the following possibility exists in conventional refrigeration apparatus in which the liquid branch pipe **(66)** is provided with a relief valve. That is, the discharge pressure of the compression mechanism **(11D)** increases too much before the relief valve is opened, thereby activating the pressure switch **(78)** for high pressure protection. As a result, the compression mechanism **(11D)** stops operating, thereby causing the apparatus to stop operating due to malfunction. In the present embodiment, however, such malfunction is prevented by setting the set pressure, at which the solenoid valve **(SV1)** is placed in the opened state when the high pressure of the refrigerant circuit **(50)** increase, to fall below the working pressure of the pressure switch **(78).**

In addition, during the 100% heat recover operation mode, the solenoid valve **(SV1)** is controlled as follows. If the amount of liquid refrigerant accumulated in the indoor heat exchanger **(21)** and the liquid-side interunit piping line **(53, 54, 55)** is below a predetermined value, the solenoid valve **(SV1)** is closed. On the other hand, if it is estimated that the liquid refrigerant amount reaches the predetermined value or above, the solenoid valve **(SV1)** is opened. In this case, if the value detected by the gas temperature sensor **(86)** for detection of the temperature of gas refrigerant in the indoor heat exchanger **(21)** approaches the saturated temperature corresponding to the pressure, it can be estimated that there is an accumulation of liquid refrigerant in the indoor heat exchanger **(21)** and the liquid-side interunit piping line **(53, 54, 55).**

If, in the way as described above, it is estimated that the liquid refrigerant amount reaches the predetermined value or above, then the solenoid valve **(SV1)** is opened to thereby permit escape of high pressure refrigerant in the indoor heat exchanger **(21)** and the liquid-side interunit piping line **(53, 54, 55)** into the receiver **(17).** Accordingly, even in the case where there is no/little increase in the discharge pressure of the compression mechanism **(11D),** it is possible to prevent too much accumulation of liquid refrigerant in the indoor heat exchanger **(21)** and the liquid-side interunit piping line **(53, 54, 55).**

In addition, during the 100% heat recovery operation mode, the solenoid valve **(SV1)** is controlled as follows. That is, if the temperature of liquid refrigerant in the indoor heat exchanger **(21)** is below a predetermined value, the solenoid valve **(SV1)** is closed. On the other hand, if the liquid refrigerant temperature increases to equal or exceed the predetermined value, the solenoid valve **(SV1)** is opened. Also in this case, by setting the pressure corresponding to the set temperature at which the solenoid valve **(SV1)** is opened to fall below the working pressure of the pressure switch **(78)** for high pressure protection, it becomes possible to prevent the discharge pressure of the compression mechanism **(11D)** from increasing too much.

Furthermore, during the 100% heat recovery operation mode, the solenoid valve **(SV1)** is controlled as follows. That is, if the pressure of liquid refrigerant in the liquid-side interunit piping line **(53, 54, 55)** is below a predetermined value, the solenoid valve **(SV1)** is closed. On the other hand, if the liquid refrigerant pressure increases to equal or exceed the predetermined value, the solenoid valve **(SV1)** is opened. The reason for this is that since the heating capacity is sufficiently obtained when the pressure of the liquid-side interunit piping line **(53, 54, 55)** is high, it is necessary to permit escape of liquid refrigerant to the receiver **(17).**

More specifically, the following control is possible. In the first place, if, when it is estimated that the difference between the temperature of gas refrigerant and the temperature of liquid refrigerant detected respectively by the temperature sensors **(86, 85)** disposed respectively at the inlet and outlet sides of the indoor heat exchanger (21)) is small during the heating operation mode of 100% heat recovery (which is an operation mode during which the indoor fan **(23)** is rotated), it is possible to estimate that: the gas refrigerant temperature approaches the liquid refrigerant temperature; there is an accumulation of liquid refrigerant in the indoor heat exchanger **(21);** and the pressure of the liquid-side interunit piping line **(53, 54, 55)** is high. Accordingly, the solenoid valve **(SV1)** is controlled such that it enters the opened state.

In the second place, since the high pressure tends to increase when the room temperature approaches a set temperature (i.e., when being about to be thermo-offed) or when an overload occurs because the room temperature is high, the solenoid valve **(SV1)** is controlled such that it enters the opened state. In addition, since the room temperature is assumed to be high when the temperature of outside air is high, the solenoid valve **(SV1)** is likewise controlled such that it enters the opened state.

By virtue of the above-described arrangement, it becomes possible to prevent the discharge pressure of the compression mechanism **(11D)** from increasing too much.

### SECOND HEATING/REFRIGERATION OPERATION MODE

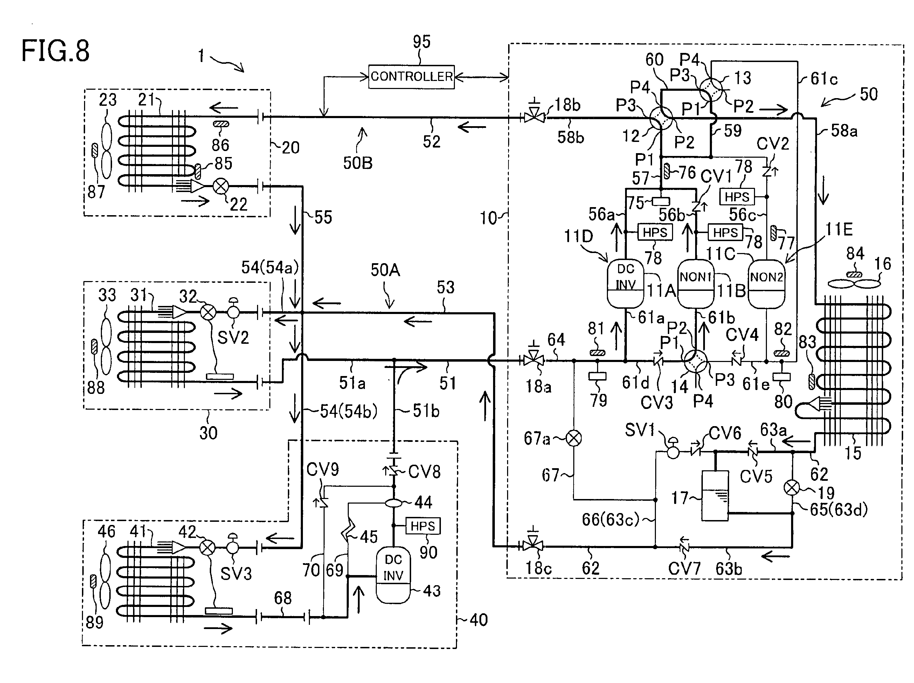

The second heating/refrigeration operation mode is an operation mode that is performed when the heating capability of the indoor unit **(20)** is more than needed in the first heating/refrigeration operation mode. During the second heating/refrigeration operation mode, as shown in Figure **8****,** the inverter compressor (11A) and the first non-inverter compressor **(11B)** together constitute the compression mechanism **(11D)** of the first system while on the other hand the second non-inverter compressor **(11C)** alone constitutes the compression mechanism **(11E)** of the second system. And the inverter compressor **(11A)** and the first non-inverter compressor **(11B)** are activated and, in addition, the booster compressor **(43)** is also activated. The second non-inverter compressor **(11C)** is placed at rest.

The second heating/refrigeration operation mode is similar to the first heating/refrigeration operation mode (for example, the same valve setting), with the exception that the second four-way valve **(13)** changes state to the second state, as indicated by solid line representation in Figure **8****.**

Accordingly, a portion of the discharged refrigerant from the inverter compressor **(11A)** and the first non-inverter compressor **(11B)** flows into the indoor heat exchanger **(21),** and is condensed to liquid refrigerant, as in the first heating/refrigeration operation mode. The condensed liquid refrigerant flows, before the integrated liquid pipe **(53),** into the first branch liquid pipe **(54)** (the cold storage-side first branch liquid pipe **(54a)** and the freeze storage-side first branch liquid pipe **(54b))** from the second branch liquid pipe **(55)** of the liquid-side interunit piping line **(53, 54, 55).**

On the other hand, the other portion of the discharged refrigerant from the inverter compressor **(11A)** and the first non-inverter compressor **(11B)** passes through the auxiliary gas pipe **(59),** then through the second four-way valve **(13),** and then through the first four-way valve **(12).** Thereafter, the refrigerant flows through the outdoor first gas pipe **(58a),** and is condensed to liquid refrigerant in the outdoor heat exchanger **(15).** The condensed liquid refrigerant passes through the receiver **(17)** during flow through the outdoor liquid pipe **(62),** passes through the integrated liquid pipe **(53)** of the liquid-side interunit piping line **(53, 54, 55),** flows to the first branch liquid pipe **(54)** (the cold storage-side first branch liquid pipe **(54a)** and the freeze storage-side first branch liquid pipe **(54b)),** and joins the refrigerant from the second branch liquid pipe **(55).**

Thereafter, the liquid refrigerant flowing through the cold storage-side first branch liquid pipe **(54a)** flows into the cold storage heat exchanger **(31),** is evaporated to gas refrigerant, and flows through the cold storage-side branch gas pipe **(51a).** On the other hand, the liquid refrigerant flowing through the freeze storage-side first branch liquid pipe **(54b)** flows into the freeze storage heat exchanger **(41),** is evaporated to gas refrigerant, is drawn into and compressed in the booster compressor **(43),** and is discharged to the freeze storage-side branch gas pipe **(51b).** The flow of the gas refrigerant evaporated in the cold storage heat exchanger **(31)** and the flow of the gas refrigerant discharged from the booster compressor **(43)** join together in the first gas-side interunit piping line **(51).** The combined refrigerant is then returned back, through the low pressure gas pipe **(64),** to the inverter compressor **(11A)** and the first non-inverter compressor **(11B).**

During the second heating/refrigeration operation mode, repetition of such refrigerant circulation effects heating of the store space simultaneously with cooling of the cold storage showcase compartment and cooling of the freeze storage showcase compartment. At this time, the cooling capacity (the amount of heat of evaporation) of the cold and freeze storage units **(30, 40)** and the heating capacity (the amount of heat of condensation) of the indoor unit **(20)** are out of balance with each other, and surplus heat of condensation is discharged to outside the room in the outdoor heat exchanger **(15).**

### THIRD HEATING/REFRIGERATION OPERATION MODE

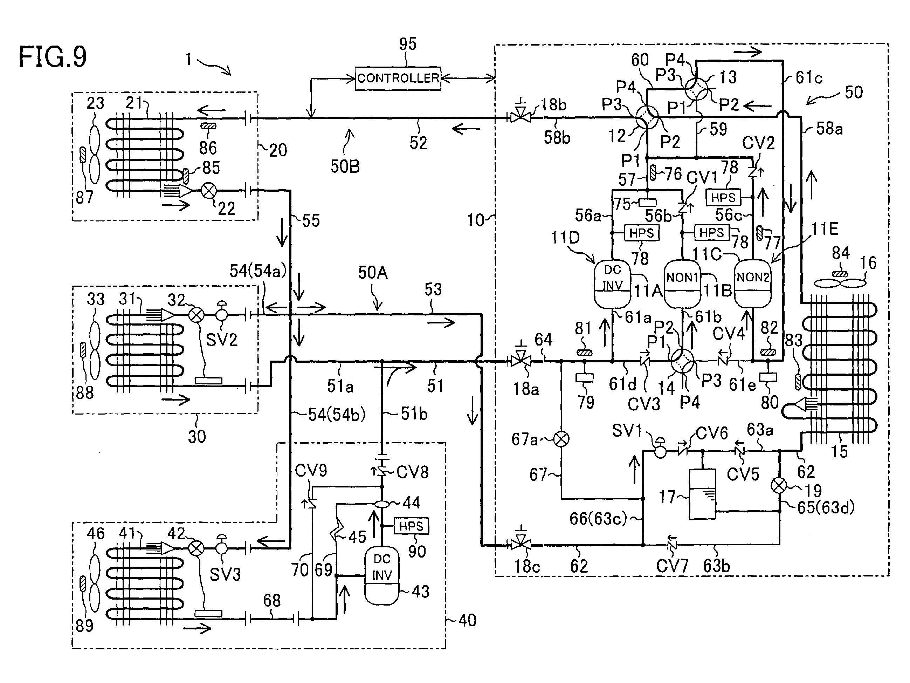

The third heating/refrigeration operation mode is an operation mode that is performed if the heating capability of the indoor unit **(20)** is insufficient in the first heating/refrigeration operation mode. During the third heating/refrigeration operation mode, as shown in Figure **9****,** the inverter compressor **(11A)** and the first non-inverter compressor **(11B)** together constitute the compression mechanism **(11D)** of the first system while, on the other hand, the second non-inverter compressor **(11C)** alone constitutes the compression mechanism **(11E)** of the second system. And, the inverter compressor **(11A),** the first non-inverter compressor **(11B),** and the second non-inverter compressor **(11C)** are activated and, in addition, the booster compressor **(43)** is also activated.

The third heating/refrigeration operation mode is set in the same way as the first heating/refrigeration operation mode, with the exception that: the degree of opening of the outdoor expansion valve **(19)** is controlled; the solenoid valve **(SV1)** of the liquid branch pipe **(66)** is opened; and the second non-inverter compressor **(11C)** is activated.

Accordingly, discharged refrigerant from the inverter compressor **(11A),** the first non-inverter compressor **(11B),** and the second non-inverter compressor **(11C)** flows through the second gas-side interunit piping line **(52)** into the indoor heat exchanger **(21),** and is condensed to liquid refrigerant, as in the first heating/refrigeration operation mode. The condensed liquid refrigerant diverges from the second branch liquid pipe (55) of the liquid-side interunit piping line **(53, 54, 55)** into the first branch liquid pipe (54) (the cold storage-side first branch liquid pipe **(54a)** and the freeze storage-side first branch liquid pipe **(54b))** and into the integrated liquid pipe **(53).**

The liquid refrigerant flowing through the cold storage-side first branch liquid pipe **(54a)** flows into the cold storage heat exchanger **(31),** is evaporated to gas refrigerant, and flows through the cold storage-side branch gas pipe **(51a).** Meanwhile, the liquid refrigerant flowing through the freeze storage-side first branch liquid pipe **(54b)** flows into the freeze storage heat exchanger **(41),** is evaporated to gas refrigerant, is drawn into and compressed in the booster compressor **(43),** and is discharged to the freeze storage-side branch gas pipe **(51b).** The flow of the gas refrigerant evaporated in the cold storage heat exchanger **(31)** and the flow of the gas refrigerant discharged from the booster compressor **(43)** join together in the first gas-side interunit piping line **(51).** The combined refrigerant is then returned back, through the low pressure gas pipe **(64),** to the inverter compressor **(11A)** and to the first non-inverter compressor **(11B).**

On the other hand, the liquid refrigerant condensed in the indoor heat exchanger **(21)** and thereafter flowing through the integrated liquid pipe **(53)** flows through the liquid branch pipe **(66)** into the receiver **(17).** Thereafter, the liquid refrigerant flows into the outdoor heat exchanger **(15)** by way of the outdoor expansion valve **(19)** and is evaporated to gas refrigerant. The evaporated gas refrigerant flows through the outdoor first gas pipe **(58a),** then through the first four-way valve **(12),** and then through the second four-way valve **(13).** Then, the gas refrigerant flows through the suction pipe **(61c)** of the second non-inverter compressor **(11C),** and is returned back to the second non-inverter compressor **(11C).**

During the third heating/refrigeration operation mode, repetition of such refrigerant circulation effects heating of the store space simultaneously with cooling of the cold storage showcase compartment and cooling of the freeze storage showcase compartment. At this time, the cooling capacity (the amount of heat of evaporation) of the cold and freeze storage units **(30, 40)** and the heating capacity (the amount of heat of condensation) of the indoor unit **(20)** are out of balance with each other, and the amount of heat of evaporation lacked is obtained from the outdoor heat exchanger (15).

### ADVANTAGEOUS EFFECTS OF THE EMBODIMENT

In the present embodiment, during the 100% heat recovery operation mode in which: the outdoor heat exchanger **(15)** is not used; the indoor heat exchanger **(21)** functions as a condenser; and the cold and freeze storage heat exchangers **(31, 41)** function as evaporators, the solenoid valve **(SV1)** of the liquid branch pipe **(66)** is placed in the closed state under normal conditions whereby the apparatus is able to operate wherein the quantity of heat of condensation of the indoor heat exchanger **(21)** and the quantity of heat of evaporation of the cold and freeze heat exchangers **(31, 41)** are in balance with each other.

On the other hand, for example, if the operation capacity of the compression mechanism **(11D)** is increased when there is excess refrigerant in the indoor heat exchanger **(21)** and the liquid-side interunit piping line **(53, 54, 55),** the solenoid valve **(SV1)** is placed in the opened state to thereby permit escape of the liquid refrigerant accumulated in the indoor heat exchanger **(21)** and the liquid-side interunit piping line **(53, 54, 55)** to the receiver **(17),** and so it becomes possible to prevent the high pressure of the compression mechanism **(11D)** from increasing too much. Accordingly, if it is arranged such that prior to activation of the pressure switch **(78)** for high pressure protection the solenoid valve **(SV1)** is placed in the opened state, this makes it possible to prevent the refrigeration apparatus from malfunctioning to stop operating due to shutdown of the compression mechanism **(11D).**

In addition, in the present embodiment, the two indoor units **(20)** are connected in parallel. The discharge pressure of the compression mechanism **(11D)** tends to increase due to accumulation of liquid refrigerant in the indoor heat exchanger **(21)** and the liquid-side interunit piping line **(53, 54, 55),** when one of the two indoor units **(20)** is placed in the thermo-off state, and the apparatus tends to stop operating due to activation of the pressure switch **(78)** for high pressure protection. However, the solenoid valve **(SV1)** is opened prior to activation of the pressure switch **(78),** thereby ensuring that the malfunction of the refrigeration apparatus is prevented from occurring.

In addition, it is possible to prevent the occurrence of problem conditions to the apparatus by closing the solenoid valve **(SV1)** during the cooling operation mode and opening the solenoid valve **(SV1)** only when the outdoor heat exchanger **(15)** functions as an evaporator.

### ANOTHER EMBODIMENT

With respect to the above-described embodiment, the following configurations may be employed.

For example, although the description has been made in regard to an exemplary case where two indoor units **(20),** eight cold storage units **(30),** and a freeze storage unit **(40)** are disposed to a single outdoor unit **(10).** However, the number of utilization-side units **(20),** the number of utilization-side units **(30),** and the number of utilization-side units **(40)** may be modified according to need as long as the 100% heat recovery operation mode is possible to perform.

In addition, in the above-described embodiment, the description has been made in regard to an exemplary case where the compression mechanism **(11D, 11E)** is formed by the three compressors **(11A, 11B, 11C).** However, the number of compressors may be modified according to need.

It should be noted that the above-described embodiments are essentially preferable exemplifications which are not intended in any sense to limit the scope of the present invention, its application, or its application range.

### INDUSTRIAL APPLICABILITY

As has been described above, the present invention finds its utility in the field of refrigeration apparatuses having multiple systems of utilization-side heat exchangers and capable of performing a 100% heat recovery operation mode between each utilization-side heat exchanger.

## Claims

1. A refrigeration apparatus comprising: a heat source-side unit **(10)** including a compression mechanism **(11D, 11E),** a heat source-side heat exchanger **(15),** and a receiver **(17);** a first utilization-side unit **(30, 40)** including a first utilization-side heat exchanger **(31, 41);** a second utilization-side unit **(20)** including a second utilization-side heat exchanger **(21);** and a gas-side interunit piping line **(51, 52)** and a liquid-side interunit piping line **(53, 54, 55)** which establish connections between each unit **(10, 20, 30, 40)** to thereby constitute a refrigerant circuit **(50);**
the gas-side interunit piping line **(51, 52)** including: a first gas-side interunit piping line **(51)** which is connected to the heat source-side unit **(10)** and to the first utilization-side unit **(30, 40);** and a second gas-side interunit piping line **(52)** which is connected to the heat source-side unit **(10)** and to the second utilization-side unit **(20);**
the liquid-side interunit piping line **(53, 54, 55)** including: an integrated liquid pipe **(53)** which is connected to the heat source-side unit **(10);** a first branch liquid pipe **(54)** which diverges from the integrated liquid pipe **(53)** to connect to the first utilization-side unit (30, **40);** and a second branch liquid pipe **(55)** which diverges from the integrated liquid pipe **(53)** to connect to the second utilization-side unit **(20);**
wherein the refrigeration apparatus further comprises: a liquid refrigerant inflow passageway **(66)** which is connected to a heat source-side liquid pipe **(62)** of the heat source-side unit **(10),** the heat source-side liquid pipe **(62)** being connected to the integrated liquid pipe **(53)** of the liquid-side interunit piping line **(53, 54, 55),** and to an inlet port of the receiver **(17);** and a switch valve **(SV1)** which is disposed in the liquid refrigerant inflow passageway **(66)** and which is capable of being on-off controlled.

2. The refrigeration apparatus of claim 1, wherein a plurality of the second utilization-side units **(20)** are connected in parallel to the heat source-side unit **(10).**

3. The refrigeration apparatus of claim 1,
wherein the first utilization-side unit **(30, 40)** is a cooling machine for providing compartment cooling and the heat source-side unit **(10)** and the first utilization-side unit **(30, 40)** together constitute a first system-side circuit **(50A)** in which refrigerant is circulated in one direction; and
wherein the second utilization-side unit **(20)** is an air conditioning machine for providing indoor air conditioning and the heat source-side unit **(10)** and the second utilization-side unit **(20)** together constitute a second system-side circuit **(50B)** in which refrigerant is reversibly circulated.

4. The refrigeration apparatus of claim 1, wherein the refrigeration apparatus further comprises control means **(95)** for performing on-off control of the switch valve **(SV1)** in response to the operation state.

5. The refrigeration apparatus of claim 4, wherein the control means **(95)** is configured such that in an operation state in which the second utilization-side heat exchanger **(21)** functions as a condenser while the first utilization-side heat exchanger **(31, 41)** functions as an evaporator, the switch valve **(SV1)** is placed either in the closed state if the discharge pressure of the compression mechanism **(11D, 11E)** is below a predetermined value or in the opened state if the discharge pressure of the compression mechanism **(11D, 11E)** increases to equal or exceed the predetermined value.

6. The refrigeration apparatus of claim 4, wherein the control means **(95)** is configured such that in an operation state in which the second utilization-side heat exchanger **(21)** functions as a condenser while the first utilization-side heat exchanger **(31, 41)** functions as an evaporator, the switch valve **(SV1)** is placed either in the closed state if the amount of liquid refrigerant accumulated in the second utilization-side heat exchanger **(21)** and the liquid-side interunit piping line **(53, 54, 55)** is below a predetermined value or in the opened state if it is estimated that the liquid refrigerant amount accumulated reaches the predetermined value or above.

7. The refrigeration apparatus of claim 4, wherein the control means **(95)** is configured such that in an operation state in which the second utilization-side heat exchanger **(21)** functions as a condenser while the first utilization-side heat exchanger **(31, 41)** functions as an evaporator, the switch valve (SV1) is placed either in the closed state if the temperature of liquid refrigerant in the second utilization-side heat exchanger **(21)** is below a predetermined value or in the opened state if the liquid refrigerant temperature increases to equal or exceed the predetermined value.

8. The refrigeration apparatus of claim 4, wherein the control means **(95)** is configured such that in an operation state in which the second utilization-side heat exchanger **(21)** functions as a condenser while the first utilization-side heat exchanger **(31, 41)** functions as an evaporator, the switch valve **(SV1)** is placed either in the closed state if the pressure of liquid refrigerant in the liquid-side interunit piping line **(53, 54, 55)** is below a predetermined value or in the opened state if the liquid refrigerant pressure increases to equal or exceed the predetermined value.
